# EUROPEAN PATENT SPECIFICATION

(11) **EP 2 961 232 B1**
(45) Date of publication and mention of the grant of the patent: **09.08.2017**
(21) Application number: 13879023.3
(22) Date of filing: 18.09.2013
(51) Int. Cl.: H04L 1/18, H04W 8/26, H04W 72/04

(54) **METHOD FOR DETECTING USER EQUIPMENT CONFLICT, USER EQUIPMENT, AND BASE STATION**
VERFAHREN ZUR ERKENNUNG VON BENUTZERGERÄTEKONFLIKT, BENUTZERGERÄT UND BASISSTATION
PROCÉDÉ DE DÉTECTION DE CONFLIT D'ÉQUIPEMENT UTILISATEUR, ÉQUIPEMENT UTILISATEUR ET STATION DE BASE

(30) Priority: 20.03.2013 WO PCT/CN2013/072940
(43) Date of publication of application: 30.12.2015
(73) Proprietor: Huawei Technologies Co., Ltd., Longgang District Shenzhen, Guangdong 518129 (CN)
(72) Inventor: LI, Bingzhao, Shenzhen Guangdong 518129 (CN); CHEN, Yanyan, Shenzhen Guangdong 518129 (CN); PANG, Lingli, Shenzhen Guangdong 518129 (CN); ZHENG, Xiaoxiao, Shenzhen Guangdong 518129 (CN); MA, Xueli, Shenzhen Guangdong 518129 (CN)
(74) Representative: Pfenning, Meinig & Partner mbB
(86) International application number: PCT/CN2013/083816
(87) International publication number: WO 2014/146412

(56) References cited:
- EP-A1- 1 901 574
- WO-A1-2009/088858
- WO-A1-2012/044240
- WO-A1-2013/020454
- WO-A2-2009/082330
- WO-A2-2009/089490
- CN-A- 1 825 989
- CN-A- 101 895 855
- CN-A- 102 932 115
- TW-A- 201 032 657
- US-A1- 2009 086 698
- US-A1- 2009 203 384
- US-A1- 2013 035 102

## Description

### TECHNICAL FIELD

The present invention relates to the field of communications technologies, and in particular, to a user equipment collision detection method, user equipment, and a base station.

### BACKGROUND

A UMTS Terrestrial Radio Access Network (UTRAN) registration area (URA) in a universal mobile telecommunications system (UMTS) includes several cells. When user equipment (UE) in a UTRAN registration area-paging channel (URA-PCH) state is handed over between cells in the URA, no cell update needs to be performed. When the UE needs to transmit data to a base station after the cell handover, the UE first needs to switch to a CELL-Forward access channel (CELL-FACH) state and acquire a common enhanced uplink dedicated channel (E-DCH) of a new cell and an enhanced radio network temporary identifier (E-RNTI) related to the new cell.

In the prior art, UE sends a collision detection request carrying an enhanced radio network temporary identifier (E-RNTI) on a common E-DCH to the base station, and the base station performs collision detection on the common E-DCH according to the E-RNTI to determine whether the common E-DCH is occupied by other UE.

However, in the prior art, E-RNTIs of various cells may be duplicate. Therefore, when UE is handed over between cells, the UE needs to reacquire an enhanced radio network temporary identifier (E-RNTI) related to a new cell to complete collision detection on a common E-DCH, resulting in a network resource waste and a long collision detection delay.
US 2009/0086698 A1 discusses a method and apparatus for managing a collision in random access channel (RACH) access transmissions. A wireless transmit/receive unit (WTRU) transmits WTRU-dependent information to confirm that a detected acquisition indicator (AI) is intended to the WTRU. The WTRU-dependent information may be transmitted separately after detecting the AI, may be transmitted along with a RACH preamble, or may be sent in an E-RACH message. The WTRU-dependent information may be a random number, a sequence or scrambling code randomly selected from a pre-determined set of sequences or scrambling codes. Alternatively, the WTRU-dependent information may be a pre-configured identifier, or information derived from the pre-configured identifier. Alternatively, after detecting an AI, the WTRU may randomly select an enhanced dedicated channel (E-DCH) resource from a set of E-DCH resources associated with an RACH resource used for transmission of the RACH preamble and transmit an E-RACH message using the selected E-DCH resource.

### SUMMARY

The present invention provides a user equipment collision detection method, user equipment, and a base station to solve problems such as network resource wastes and long collision detection delay in the prior art that occur when collision detection is performed after a cell handover of UE. The invention is defined by the appended claims.

A first aspect of the present invention provides a user equipment collision detection method, including:
sending, by user equipment, a collision detection request on a common enhanced uplink dedicated channel (E-DCH) to a base station, where the collision detection request carries a first radio network temporary identifier (RNTI) corresponding to the user equipment, so that the base station determines whether the common E-DCH is occupied by other user equipment than the user equipment;
receiving, by the user equipment, ,an acknowledgement message sent by the base station, where the acknowledgement message carries absolute grant (AG) information and a cyclic redundancy check (CRC) code; and
determining, by the user equipment according to the first RNTI, the AG information, and the CRC code, whether the common E-DCH is an available resource.

With reference to the first aspect, in a first feasible implementation manner of the first aspect, the first RNTI includes a first definition portion and a second definition portion; and
the determining, by the user equipment according to the first RNTI, the AG information, and the CRC code, whether the common E-DCH is an available resource includes:
de-masking, by the user equipment, the CRC code by using the first definition portion; and
if a CRC code is verified successfully, and the second definition portion is included in the AG information, determining, by the user equipment, that the common E-DCH is an available resource.

With reference to the first aspect, in a second feasible implementation manner of the first aspect, the determining, by the user equipment according to the first RNTI, the AG information, and the CRC code, whether the common E-DCH is an available resource includes:
de-masking, by the user equipment by using the first RNTI, a sequence including the AG information and the CRC code; and
if a CRC code is verified successfully, determining, by the user equipment, that the common E-DCH is an available resource.

With reference to the first aspect, in a third feasible implementation manner of the first aspect, the determining, by the user equipment according to the first RNTI, the AG information, and the CRC code, whether the common E-DCH is an available resource includes:
de-masking, by the user equipment, the CRC code by using the first RNTI; and
if a CRC code is verified successfully, determining, by the user equipment, that the common E-DCH is an available resource.

With reference to the first aspect or the first to third feasible implementation manners of the first aspect, in a fourth feasible implementation manner, before the sending, by user equipment, a collision detection request on a common enhanced uplink dedicated channel (E-DCH) to a base station, the method further includes:
receiving, by the user equipment, a first broadcast message sent by the base station, where the first broadcast message carries common E-DCH resource information, so that the user equipment selects, according to the common E-DCH resource information, the common E-DCH for sending the collision detection request.

With reference to the first aspect, in a fifth feasible implementation manner of the first aspect, the sending, by user equipment, a collision detection request on a common enhanced uplink dedicated channel (E-DCH) to a base station further includes:
determining, by the user equipment, an E-RNTI, in a cell in which the user equipment is located, corresponding to the first RNTI; and
sending, by the user equipment to the base station on the common E-DCH, a collision detection request carrying the E-RNTI.

With reference to the fifth feasible implementation manner of the first aspect, in a sixth feasible implementation manner, the determining, by the user equipment according to the first RNTI, the AG information, and the CRC code, whether the common E-DCH is an available resource includes:
de-masking, by the user equipment, the CRC code by using the E-RNTI; and
if a CRC code is verified successfully, determining, by the user equipment, that the common E-DCH is an available resource.

With reference to the fifth feasible implementation manner or the sixth feasible implementation manner of the first aspect, in a seventh feasible implementation manner of the first aspect, before the sending, by user equipment, a collision detection request on a common enhanced uplink dedicated channel (E-DCH) to a base station, the method further includes:
receiving, by the user equipment, a second broadcast message sent by the base station, where the second broadcast message carries common E-DCH resource information, so that the user equipment selects, according to the common E-DCH resource information, the common E-DCH for sending the collision detection request, where the second broadcast message further carries an enhanced radio network temporary identifier (E-RNTI) list of the cell in which the user equipment is located.

With reference to the fifth feasible implementation manner or the sixth feasible implementation manner or the seventh feasible implementation manner of the first aspect, in an eighth feasible implementation manner, the determining, by the user equipment, an E-RNTI, in a cell in which the user equipment is located, corresponding to the first RNTI includes:
using, by the user equipment, a value of the first RNTI as a dividend and using a quantity of E-RNTIs in the E-RNTI list as a divisor, to acquire a corresponding remainder; and acquiring an enhanced radio network temporary identifier (E-RNTI) whose sequence number in the E-RNTI list is the remainder.

With reference to the first aspect or one of the eight feasible implementation manners of the first aspect, in a ninth feasible implementation manner, the first broadcast message or the second broadcast message may further carry an E-RNTI corresponding to the common E-DCH resource information; and
after determining that the common E-DCH is an available resource, the user equipment performs data transmission with the base station by using the E-RNTI corresponding to the common E-DCH.

A second aspect of the present invention provides a user equipment collision detection method, including:
receiving, by a base station, a collision detection request that is sent on a common enhanced uplink dedicated channel (E-DCH) by user equipment, where the collision detection request carries a first radio network temporary identifier (RNTI) corresponding to the user equipment;
determining, by the base station, whether the common E-DCH is occupied by other user equipment than the user equipment; and
sending, by the base station, an acknowledgement message to the user equipment according to the determining result, where the acknowledgement message carries absolute grant (AG) information and a cyclic redundancy check (CRC) code, so that the user equipment determines, according to the first RNTI, the AG information, and the CRC code, whether the common E-DCH is an available resource.

With reference to the second aspect, in a first feasible implementation manner of the second aspect, the first RNTI includes a first definition portion and a second definition portion; and
before the sending, by the base station, an acknowledgement message to the user equipment according to the determining result, the method further includes:
masking, by the base station, the CRC code by using the first definition portion; and
determining, by the base station, the second definition portion as the AG information.

With reference to the second aspect, in a second feasible implementation manner of the second aspect, before the sending, by the base station, an acknowledgement message to the user equipment according to the determining result, the method further includes:
masking, by the base station by using the first RNTI, a sequence including the AG information and the CRC code.

With reference to the second aspect, in a third feasible implementation manner of the second aspect, before the sending, by the base station, an acknowledgement message to the user equipment according to the determining result, the method further includes:
masking, by the base station, the CRC code by using the first RNTI.

With reference to the second aspect or the first to third feasible implementation manners of the second aspect, in a fourth feasible implementation manner, before the receiving, by a base station, a collision detection request that is sent on a common enhanced uplink dedicated channel (E-DCH) by user equipment, the method further includes:
sending, by the base station, a first broadcast message to the user equipment, where the first broadcast message carries common E-DCH resource information, so that the user equipment selects, according to the common E-DCH resource information, the common E-DCH for sending the collision detection request.

With reference to the second aspect, in a fifth feasible implementation manner of the second aspect, if the collision detection request carries an E-RNTI, in a cell in which the user equipment is located, corresponding to the first RNTI, before the sending, by the base station, an acknowledgement message to the user equipment according to the determining result, the method further includes:
masking, by the base station, the CRC code by using the E-RNTI.

With reference to the fifth feasible implementation manner of the second aspect, in a sixth feasible implementation manner, before the receiving, by a base station, a collision detection request that is sent on a common enhanced uplink dedicated channel (E-DCH) by user equipment, the method further includes:
sending, by the base station, a second broadcast message to the user equipment, where the second broadcast message carries common E-DCH resource information, so that the user equipment selects, according to the common E-DCH resource information, the common E-DCH for sending the collision detection request, where the second broadcast message further carries an enhanced radio network temporary identifier (E-RNTI) list of the cell in which the user equipment is located.

A third aspect of the present invention provides user equipment, including:
a sending module, configured to send a collision detection request on a common enhanced uplink dedicated channel (E-DCH) to a base station, where the collision detection request carries a first radio network temporary identifier (RNTI) corresponding to the user equipment, so that the base station determines whether the common E-DCH is occupied by other user equipment than the user equipment;
a receiving module, configured to receive an acknowledgement message sent by the base station, where the acknowledgement message carries absolute grant (AG) information and a cyclic redundancy check (CRC) code; and
a determining module, configured to determine, according to the first RNTI, the AG information, and the CRC code, whether the common E-DCH is an available resource.

With reference to the third aspect, in a first feasible implementation manner of the third aspect, the first RNTI includes a first definition portion and a second definition portion;
the user equipment further includes a first de-masking module, configured to de-mask the CRC code by using the first definition portion; and
if a CRC code is verified successfully, and the second definition portion is included in the AG information, the determining module is further configured to determine that the common E-DCH is an available resource.

With reference to the third aspect, in a second feasible implementation manner of the third aspect, the user equipment further includes a second de-masking module, configured to de-mask, by using the first RNTI, a sequence including the AG information and the CRC code; and
if a CRC code is verified successfully, the determining module is further configured to determine that the common E-DCH is an available resource.

With reference to the third aspect, in a third feasible implementation manner of the third aspect, the user equipment further includes a third de-masking module, configured to de-mask the CRC code by using the first RNTI; and
if a CRC code is verified successfully, the determining module is further configured to determine that the common E-DCH is an available resource.

With reference to the third aspect or the first to third feasible implementation manners of the third aspect, in a fourth feasible implementation manner, before the sending module sends the collision detection request on the common enhanced uplink dedicated channel (E-DCH) to the base station, the receiving module is further configured to receive a first broadcast message sent by the base station, where the first broadcast message carries common E-DCH resource information, so that the user equipment selects, according to the common E-DCH resource information, the common E-DCH for sending the collision detection request.

With reference to the third aspect, in a fifth feasible implementation manner of the third aspect, the determining module is further configured to determine an E-RNTI, in a cell in which the user equipment is located, corresponding to the first RNTI; and
the sending module is further configured to send, to the base station on the common E-DCH, a collision detection request carrying the E-RNTI.

With reference to the fifth feasible implementation manner of the third aspect, in a sixth feasible implementation manner, the user equipment further includes a fourth de-masking module, configured to de-mask the CRC code by using the E-RNTI; and
if a CRC code is verified successfully, the determining module is further configured to determine that the common E-DCH is an available resource.

With reference to the fifth feasible implementation manner or the sixth feasible implementation manner of the third aspect, in a seventh feasible implementation manner, before the sending module sends the collision detection request on the common enhanced uplink dedicated channel (E-DCH) to the base station, the receiving module is further configured to receive a second broadcast message sent by the base station, where the second broadcast message carries common E-DCH resource information, so that the user equipment selects, according to the common E-DCH resource information, the common E-DCH for sending the collision detection request, where the second broadcast message further carries an enhanced radio network temporary identifier (E-RNTI) list of the cell in which the user equipment is located.

With reference to the fifth feasible implementation manner or the sixth feasible implementation manner or the seventh feasible implementation manner of the third aspect, in an eighth feasible implementation manner, the determining module is further configured to: use a value of the first RNTI as a dividend and use a quantity of E-RNTIs in the E-RNTI list as a divisor, to acquire a corresponding remainder; and acquire an enhanced radio network temporary identifier (E-RNTI) whose sequence number in the E-RNTI list is the remainder.

With reference to the third aspect or one of the eight feasible implementation manners of the third aspect, in a ninth feasible implementation manner, the first broadcast message or the second broadcast message may further carry an E-RNTI corresponding to the common E-DCH resource information; and
after determining that the common E-DCH is an available resource, the user equipment performs data transmission with the base station by using the E-RNTI corresponding to the common E-DCH.

A fourth aspect of the present invention provides a base station, including:
a receiving module, configured to receive a collision detection request that is sent on a common enhanced uplink dedicated channel (E-DCH) by user equipment, where the collision detection request carries a first radio network temporary identifier (RNTI) corresponding to the user equipment;
a determining module, configured to determine whether the common E-DCH is occupied by other user equipment than the user equipment; and
a sending module, configured to send an acknowledgement message to the user equipment according to the determining result, where the acknowledgement message carries absolute grant (AG) information and a cyclic redundancy check (CRC) code, so that the user equipment determines, according to the first RNTI, the AG information, and the CRC code, whether the common E-DCH is an available resource.

With reference to the fourth aspect, in a first feasible implementation manner of the fourth aspect, the first RNTI includes a first definition portion and a second definition portion; and
before the sending module sends the acknowledgement message to the user equipment according to the determining result, the base station further includes:
a first masking module, configured to mask the CRC code by using the first definition portion; and
a first determining module, configured to determine the second definition portion as the AG information.

With reference to the fourth aspect, in a second feasible implementation manner of the fourth aspect, before the sending module sends the acknowledgement message to the user equipment according to the determining result, the base station further includes:
a second masking module, configured to mask, by using the first RNTI, a sequence including the AG information and the CRC code.

With reference to the fourth aspect, in a third feasible implementation manner of the fourth aspect, before the sending module sends the acknowledgement message to the user equipment according to the determining result, the base station further includes:
a third masking module, configured to mask the CRC code by using the first RNTI.

With reference to the fourth aspect or the first to third feasible implementation manners of the fourth aspect, in a fourth feasible implementation manner, before the receiving module receives the collision detection request that is sent on the common enhanced uplink dedicated channel (E-DCH) by the user equipment, the sending module is further configured to send a first broadcast message to the user equipment, where the first broadcast message carries common E-DCH resource information, so that the user equipment selects, according to the common E-DCH resource information, the common E-DCH for sending the collision detection request.

With reference to the fourth aspect, in a fourth feasible implementation manner of the fourth aspect, if the collision detection request carries an E-RNTI, in a cell in which the user equipment is located, corresponding to the first RNTI, before the sending module sends the acknowledgement message to the user equipment according to the determining result, the base station further includes a fourth masking module, where:
the fourth masking module is configured to mask the CRC code by using the E-RNTI.

With reference to the fourth feasible implementation manner of the fourth aspect, in a fifth feasible implementation manner, before the receiving module receives the collision detection request that is sent on the common enhanced uplink dedicated channel (E-DCH) by the user equipment, the sending module is further configured to send a second broadcast message to the user equipment, where the second broadcast message carries common E-DCH resource information, so that the user equipment selects, according to the common E-DCH resource information, the common E-DCH for sending the collision detection request, where the second broadcast message further carries an enhanced radio network temporary identifier (E-RNTI) list of the cell in which the user equipment is located.

A fifth aspect of the present invention provides user equipment, including:
a transmitter, configured to send a collision detection request on a common enhanced uplink dedicated channel (E-DCH) to a base station, where the collision detection request carries a first radio network temporary identifier (RNTI) corresponding to the user equipment, so that the base station determines whether the common E-DCH is occupied by other user equipment than the user equipment;
a receiver, configured to receive an acknowledgement message sent by the base station, where the acknowledgement message carries absolute grant (AG) information and a cyclic redundancy check (CRC) code; and
a processor, configured to determine, according to the first RNTI, the AG information, and the CRC code, whether the common E-DCH is an available resource.

With reference to the fifth aspect, in a first feasible implementation manner of the fifth aspect, the first RNTI includes a first definition portion and a second definition portion;
the processor is further configured to de-mask the CRC code by using the first definition portion; and
if a CRC code is verified successfully, and the second definition portion is included in the AG information, the processor is further configured to determine that the common E-DCH is an available resource.

With reference to the fifth aspect, in a second feasible implementation manner of the fifth aspect, the processor is further configured to de-mask, by using the first RNTI, a sequence including the AG information and the CRC code; and
if a CRC code is verified successfully, the processor is further configured to determine that the common E-DCH is an available resource.

With reference to the fifth aspect, in a third feasible implementation manner of the fifth aspect, the processor is further configured to de-mask the CRC code by using the first RNTI; and
if a CRC code is verified successfully, the processor is further configured to determine that the common E-DCH is an available resource.

With reference to the fifth aspect or the first to third feasible implementation manners of the fifth aspect, in a fourth feasible implementation manner, before the transmitter sends the collision detection request on the common enhanced uplink dedicated channel (E-DCH) to the base station, the receiver is further configured to receive a first broadcast message sent by the base station, where the first broadcast message carries common E-DCH resource information, so that the user equipment selects, according to the common E-DCH resource information, the common E-DCH for sending the collision detection request.

With reference to the fifth aspect, in a fifth feasible implementation manner of the fifth aspect, the processor is further configured to determine an E-RNTI, in a cell in which the user equipment is located, corresponding to the first RNTI; and
the transmitter is further configured to send, to the base station on the common E-DCH, a collision detection request carrying the E-RNTI.

With reference to the fifth feasible implementation manner of the fifth aspect, in a sixth feasible implementation manner, the processor is further configured to de-mask the CRC code by using the E-RNTI; and
if a CRC code is verified successfully, the processor is further configured to determine that the common E-DCH is an available resource.

With reference to the fifth feasible implementation manner or the sixth feasible implementation manner of the fifth aspect, in a seventh feasible implementation manner, before the transmitter sends the collision detection request on the common enhanced uplink dedicated channel (E-DCH) to the base station, the receiver is further configured to receive a second broadcast message sent by the base station, where the second broadcast message carries common E-DCH resource information, so that the user equipment selects, according to the common E-DCH resource information, the common E-DCH for sending the collision detection request, where the second broadcast message further carries an enhanced radio network temporary identifier (E-RNTI) list of the cell in which the user equipment is located.

With reference to the fifth feasible implementation manner or the sixth feasible implementation manner or the seventh feasible implementation manner of the fifth aspect, in an eighth feasible implementation manner, the processor is further configured to: use a value of the first RNTI as a dividend and use a quantity of E-RNTIs in the E-RNTI list as a divisor, to acquire a corresponding remainder; and acquire an enhanced radio network temporary identifier (E-RNTI) whose sequence number in the E-RNTI list is the remainder.

With reference to the fifth aspect or one of the eight feasible implementation manners of the fifth aspect, in a ninth feasible implementation manner, the first broadcast message or the second broadcast message may further carry an E-RNTI corresponding to the common E-DCH resource information; and
after the processor determines that the common E-DCH is an available resource, data transmission with the base station is performed by using the E-RNTI corresponding to the common E-DCH.

A sixth aspect of the present invention provides a base station, including:
a receiver, configured to receive a collision detection request that is sent on a common enhanced uplink dedicated channel (E-DCH) by user equipment, where the collision detection request carries a first radio network temporary identifier (RNTI) corresponding to the user equipment;
a processor, configured to determine whether the common E-DCH is occupied by other user equipment than the user equipment; and
a transmitter, configured to send an acknowledgement message to the user equipment according to the determining result, where the acknowledgement message carries absolute grant (AG) information and a cyclic redundancy check (CRC) code, so that the user equipment determines, according to the first RNTI, the AG information, and the CRC code, whether the common E-DCH is an available resource.

With reference to the sixth aspect, in a first feasible implementation manner of the sixth aspect, the first RNTI includes a first definition portion and a second definition portion; and
before the transmitter sends the acknowledgement message to the user equipment according to the determining result, the processor is further configured to mask the CRC code by using the first definition portion, and determine the second definition portion as the AG information.

With reference to the sixth aspect, in a second feasible implementation manner of the sixth aspect, before the transmitter sends the acknowledgement message to the user equipment according to the determining result, the processor is further configured to mask, by using the first RNTI, a sequence including the AG information and the CRC code.

With reference to the sixth aspect, in a third feasible implementation manner of the sixth aspect, before the transmitter sends the acknowledgement message to the user equipment according to the determining result, the processor is further configured to mask the CRC code by using the first RNTI.

With reference to the sixth aspect or the first to third feasible implementation manners of the sixth aspect, in a fourth feasible implementation manner, before the receiver receives the collision detection request that is sent on the common enhanced uplink dedicated channel (E-DCH) by the user equipment, the transmitter is further configured to send a first broadcast message to the user equipment, where the first broadcast message carries common E-DCH resource information, so that the user equipment selects, according to the common E-DCH resource information, the common E-DCH for sending the collision detection request.

With reference to the sixth aspect, in a fifth feasible implementation manner of the sixth aspect, if the collision detection request carries an E-RNTI, in a cell in which the user equipment is located, corresponding to the first RNTI, before the transmitter sends the acknowledgement message to the user equipment according to the determining result, the processor is further configured to mask the CRC code by using the E-RNTI.

With reference to the fifth feasible implementation manner of the sixth aspect, in a sixth feasible implementation manner, before the receiver receives the collision detection request that is sent on the common enhanced uplink dedicated channel

(E-DCH) by the user equipment, the transmitter is further configured to send a second broadcast message to the user equipment, where the second broadcast message carries common E-DCH resource information, so that the user equipment selects, according to the common E-DCH resource information, the common E-DCH for sending the collision detection request, where the second broadcast message further carries an enhanced radio network temporary identifier (E-RNTI) list of the cell in which the user equipment is located.

With the user equipment collision detection method, user equipment, and base station provided by embodiments of the present invention, the user equipment sends a collision detection request on a common E-DCH to the base station, where the collision detection request carries a first RNTI corresponding to the user equipment; receives an acknowledgement message sent by the base station; and determines, according to the first RNTI, and AG information and a CRC code that are carried in the acknowledgement message, whether the common E-DCH is an available resource. Therefore, when collision detection is performed after a cell handover of the user equipment, the first RNTI does not need to be updated, thereby reducing network resource wastes in the collision detection and shortening a collision detection delay.

### BRIEF DESCRIPTION OF DRAWINGS

FIG. 1 is a flowchart of an embodiment of a user equipment collision detection method according to the present invention;
FIG. 2 is a schematic diagram of a format of a first RNTI;
FIG. 3 is a schematic diagram of masking a CRC code by using a first definition portion in a first RNTI;
FIG. 4 is a schematic diagram of masking a CRC code by using an enhanced radio network temporary identifier (E-RNTI) corresponding to a first RNTI;
FIG. 5 is a flowchart of another embodiment of a user equipment collision detection method according to the present invention;
FIG. 6 is a flowchart of still another embodiment of a user equipment collision detection method according to the present invention;
FIG. 7 is a flowchart of yet another embodiment of a user equipment collision detection method according to the present invention;
FIG. 8 is a schematic structural diagram of an embodiment of user equipment according to the present invention;
FIG. 9 is a schematic structural diagram of another embodiment of user equipment according to the present invention;
FIG. 10 is a schematic structural diagram of still another embodiment of user equipment according to the present invention;
FIG. 11 is a schematic structural diagram of yet another embodiment of user equipment according to the present invention;
FIG. 12 is a schematic structural diagram of still yet another embodiment of user equipment according to the present invention;
FIG. 13 is a schematic structural diagram of an embodiment of a base station according to the present invention;
FIG. 14 is a schematic structural diagram of another embodiment of a base station according to the present invention;
FIG. 15 is a schematic structural diagram of still another embodiment of a base station according to the present invention;
FIG. 16 is a schematic structural diagram of yet another embodiment of a base station according to the present invention;
FIG. 17 is a schematic structural diagram of still yet another embodiment of a base station according to the present invention;
FIG. 18 is a schematic structural diagram of an embodiment of user equipment according to the present invention; and
FIG. 19 is a schematic structural diagram of an embodiment of a base station according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Technologies described in this specification may be applied to various communications systems, for example, current 2G and 3G communications systems and next-generation communications systems, such as a global system for mobile communications (GSM) system, a code division multiple access (CDMA) system, a time division multiple access (TDMA) system, a wideband code division multiple access (WCDMA) system, a frequency division multiple access (FDMA) system, an orthogonal frequency-division multiple access (OFDMA) system, a single-carrier FDMA (SC-FDMA) system, a general packet radio service (GPRS) system, a long term evolution (LTE) system, and other communications systems.

User equipment involved in this application may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks by using a radio access network (such as radio access network (RAN)). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (PCS) phone, a cordless telephone set, a Session Initiation Protocol (SIP) phone, a wireless local loop (WLL) station, or a personal digital assistant (PDA). The wireless terminal may also be called a system, a subscriber unit, a subscriber station, a mobile station, a mobile terminal, a remote station, an access point, a remote terminal, an access terminal, a user terminal, a user agent, a user device, or user equipment.

A base station (for example, an access point) involved in this application may refer to a device, in an access network, in communication with a wireless terminal via one or more sectors through an air interface. The base station may be configured to mutually convert a received over-the-air frame and an IP packet and serve as a router between the wireless terminal and a rest portion of the access network, where the rest portion of the access network may include an Internet Protocol (IP) network. The base station may also coordinate attribute management of the air interface. For example, the base station may be a base station (BTS) in GSM or the CDMA, may also be a base station in WCDMA, and may further be an evolved NodeB in LTE, which is not limited in the present application.

A base station controller may be a base station controller (BSC) in GSM or CDMA, or a radio network controller (RNC) in WCDMA, which is not limited in the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

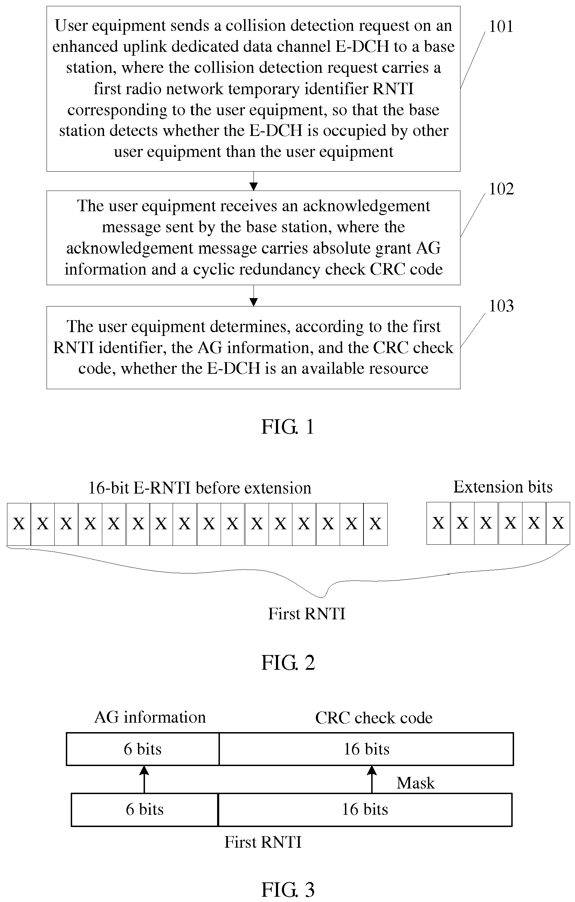

FIG. 1 is a flowchart of an embodiment of a user equipment collision detection method according to the present invention. As shown in FIG. 1, the method includes:
101. User equipment sends a collision detection request on a common enhanced uplink dedicated channel (E-DCH) to a base station, where the collision detection request carries a first radio network temporary identifier (RNTI) corresponding to the user equipment, so that the base station determines whether the common E-DCH is occupied by other user equipment than the user equipment.

Before the user equipment sends the collision detection request on the common E-DCH to the base station, a radio network controller (RNC) may allocate E-RNTI resource pools to the base station and the user equipment, where each E-RNTI resource pool includes multiple E-RNTIs. The RNC may extend an E-RNTI in an enhanced radio network temporary identifier (E-RNTI) resource pool to obtain a first RNTI, for example, may extend a 16-bit E-RNTI to 22 bits to obtain a first RNTI, as shown in FIG. 2. The first RNTI may be a unique identifier corresponding to the user equipment in an area. Optionally, the first RNTI is a unique identifier corresponding to the user equipment in an area including multiple cells, or a unique identifier corresponding to the user equipment in a UTRAN registration area URA. Optionally, the first RNTI is allocated to the user equipment by the RNC by using dedicated signaling.

In a first implementation scenario, the base station may provide common E-DCH resource information of a cell in which the user equipment is located to the user equipment in cell broadcast manner. Optionally, the base station may send a first broadcast message to the user equipment, where the first broadcast message carries the common E-DCH resource information of the cell in which the user equipment is located, so that the user equipment may select, according to the common E-DCH resource information, the common E-DCH for sending the collision detection request.

In a second implementation scenario, the base station may further send a second broadcast message to the user equipment, where the second broadcast message carries common E-DCH resource information and an enhanced radio network temporary identifier (E-RNTI) list of a cell in which the user equipment is located. The user equipment determines, according to the first RNTI, a corresponding E-RNTI in the E-RNTI list, and adds the E-RNTI to an uplink data unit when sending the uplink data unit on a common E-DCH resource. Optionally, in the second broadcast message, each set of common E-DCH resource information of the cell in which the user equipment is located includes an enhanced radio network temporary identifier (E-RNTI).

Optionally, in the second implementation scenario, that the user equipment determines, according to the first RNTI, a corresponding E-RNTI in the E-RNTI list may further be: using a value of the first RNTI as a dividend and using a quantity of E-RNTIs in the E-RNTI list as a divisor, to acquire a corresponding remainder; and acquiring an enhanced radio network temporary identifier (E-RNTI) whose sequence number in the E-RNTI list is the remainder. Optionally, after selecting a common E-DCH resource, the user equipment may acquire an enhanced radio network temporary identifier (E-RNTI) corresponding to the resource.

After receiving the collision detection request that is sent by the user equipment through the common E-DCH, the base station may determine whether the common E-DCH is occupied by other user equipment. If the common E-DCH is not occupied by other user equipment, the base station may send an acknowledgement message carrying AG information and a CRC code to the user equipment. If the common E-DCH is occupied by other user equipment, the base station may send an acknowledgement message corresponding to the other user equipment that occupies the common E-DCH to the user equipment.

Optionally, in the first implementation scenario, when the common E-DCH is not occupied by other user equipment, the base station may mask a CRC code according to a first definition portion in the first RNTI in the collision detection request of the user equipment, determine a second definition portion in the first RNTI as the absolute grant (AG) information, as shown in FIG. 3, and send the acknowledgement message including the AG information and the masked CRC code to the user equipment, where the first definition portion in the first RNTI is an 16-bit E-RNTI before extension in FIG. 2, and the second definition portion is extension bits in FIG. 2. Optionally, that the base station masks a CRC code according to the first definition portion in the first RNTI may further be that the base station performs an exclusive OR operation on the CRC code in a bitwise manner according to the first definition portion.

Optionally, in the first implementation scenario, when the common E-DCH is not occupied by the other user equipment, the base station may further mask, by using the first RNTI in the collision detection request of the user equipment, a sequence including the AG information and the CRC code, where a masking method may further be that the base station performs summation in a bitwise manner according to the first RNTI on the sequence including the AG information and the CRC code, and performs a modulo-2 operation, where a sequence obtained after the masking still has a same quantity of bits as the sequence before the masking.

Optionally, in the first implementation scenario, when the common E-DCH is not occupied by the other user equipment, the base station may further mask a CRC code by using the first RNTI, where the CRC code is a check code generated by the base station according to the AG information, and a quantity of bits in the CRC code generated by the base station is the same as a quantity of bits in the first RNTI.

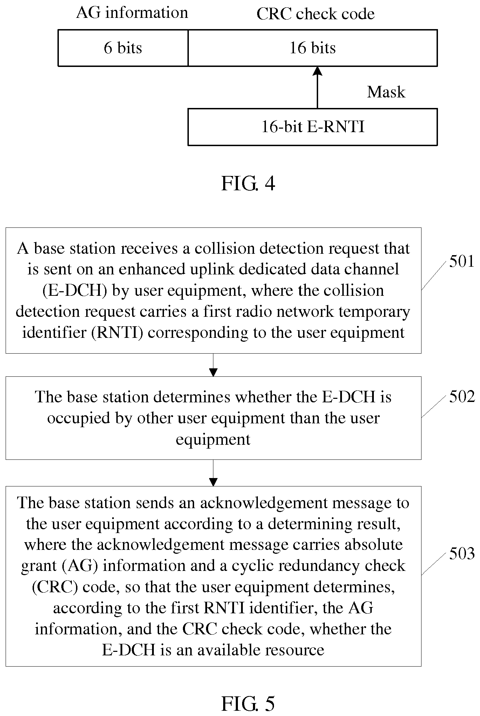

Optionally, in the second implementation scenario, when the common E-DCH is not occupied by other user equipment, the base station may further determine, according to the first RNTI in the collision detection request of the user equipment, a corresponding E-RNTI in the cell in which the user equipment is located, mask a CRC code by using the E-RNTI, as shown in FIG. 4, and send the acknowledgement message including the AG information and the masked CRC code to the user equipment.

102. The user equipment receives an acknowledgement message sent by the base station, where the acknowledgement message carries absolute grant (AG) information and a cyclic redundancy check (CRC) code.

Within coverage of the base station, all user equipments sending a collision detection request to the base station through a same E-DCH may receive an acknowledgement message that is sent by the base station through the common E-DCH.

103. The user equipment determines, according to the first RNTI, the AG information, and the CRC code, whether the common E-DCH is an available resource.

In the first implementation scenario, the first RNTI includes the first definition portion and the second definition portion. Optionally, the first definition portion may be 16 bits, for example, the 16-bit E-RNTI before extension in FIG. 2. The second definition portion may be 6 bits, for example, the extension bits in FIG. 2. After the base station masks the CRC code by using the first definition portion, determines the second definition portion as the AG information, and sends the acknowledgement message including the AG information and the masked CRC code to the user equipment, the user equipment may de-mask the masked CRC code by using the first definition portion, and check a de-masked CRC code. If the CRC code is verified successfully, the user equipment determines whether the second definition portion is included in the AG information. If the second definition portion is included in the AG information, the user equipment determines that the common E-DCH is an available resource and uses the common E-DCH as its dedicated resource. The user equipment determines, according to the first RNTI, and the AG information and the CRC code that are carried in the acknowledgement message, whether the common E-DCH is an available resource, where the AG information carried in the acknowledgement message is determined by the base station according to the first RNTI and the CRC code carried in the acknowledgement message is obtained by masking by the base station according to the first RNTI. The first RNTI may support 22 bits, and a total of 4,000,000 users who do not need to change the first RNTI may be supported by the RNC. Therefore, after a cell handover of the user equipment occurs, the user equipment does not need to change the first RNTI and may continue to use the first RNTI to perform collision detection in a new cell.

For example, if the AG information is 101100, and the second definition portion is 1011, it indicates that the second definition portion is included in the AG information. For another example, if the AG information is 010110, and the second definition portion is 1011, it also indicates that the second definition portion is included in the AG information.

Further, if the CRC code is not verified successfully, the user equipment may reselect, from common E-DCH resources, a common E-DCH for sending the collision detection request; send a collision detection request to the base station through the common E-DCH; and determine, according to an acknowledgment message sent by the base station, whether the common E-DCH is an available resource.

In the second implementation scenario, after the base station masks, by using the first RNTI, the sequence including the AG information and the CRC code, and sends the masked sequence including the AG information and the CRC code to the user equipment, the user equipment may de-mask, by using the first RNTI, the sequence including the AG information and the CRC code. If a CRC code is verified successfully, the user equipment determines that the common E-DCH is an available resource and uses the common E-DCH as its dedicated resource.

In a third implementation scenario, after the base station generates a CRC code according to the AG information, where the quantity of bits in the CRC code generated by the base station is the same as the quantity of bits in the first RNTI, for example, the bit quantities in the first RNTI and the CRC code are both 22 bits, and the base station masks the CRC code by using the first RNTI, and sends the masked CRC code to the user equipment, the user equipment may de-mask the CRC code by using the first RNTI. If a CRC code is verified successfully, the user equipment determines that the common E-DCH is an available resource and uses the common E-DCH as its dedicated resource.

In a fourth implementation scenario, the base station masks a CRC code by using the E-RNTI corresponding to the first RNTI, and sends the acknowledgement message including the AG information and the masked CRC code to the user equipment. In this case, the AG information is used to determine a size of a data packet that may be sent at a time when the user equipment sends the data packet to the base station. The user equipment may de-mask the masked CRC code by using the E-RNTI corresponding to the first RNTI, perform a CRC check, and if the check is successful, use the common E-DCH as its dedicated resource, so that the user equipment can use the common E-DCH to transmit data to the base station or receive data transmitted by the base station.

Further, if the CRC check is not successful, the user equipment may reselect, from common E-DCH resources sent by the base station, a common E-DCH for sending a collision detection request, and send the E-RNTI corresponding to the first RNTI on the common E-DCH. The user equipment may send the collision detection request to the base station through the common E-DCH, and determine, according to an acknowledgement message sent by the base station, whether the common E-DCH is an available resource.

After the user equipment uses the common E-DCH as its dedicated resource, the collision detection process ends. The user equipment may send a data packet to the base station through the common E-DCH, or receive a data packet sent by the base station. The data packet may carry data content, but does not need to carry the E-RNTI corresponding to the common E-DCH resource. After the user equipment uses the common E-DCH as its dedicated resource, the base station may also send absolute grant (AG) information and a CRC code to the user equipment through an AG channel. In this case, the AG information is used to determine the size of the data packet that may be sent at a time when the user equipment sends the data packet to the base station, and the CRC code is used to determine that the AG information is sent to the user equipment and not sent to other user equipment.

In addition, the user equipment collision detection method according to this embodiment of the present invention may also be applicable to user equipment that does not have a dedicated E-RNTI but needs to acquire a common E-DCH resource in a cell to perform data transmission. Therefore, the user equipment that does not have a dedicated E-RNTI may refer to user equipment in a non-dedicated connected state, such as CELL_FACH, CELL_PCH, URA_PCH, or idle. For example, when user equipment in URA_PCH state needs to send DCCH/DTCH data, the user equipment may select a common E-DCH resource and execute a user equipment collision detection; or when user equipment in CELL_FACH state needs to directly send DCCH/DTCH data after a cell handover, the user equipment may select a common E-DCH resource and execute a user equipment collision detection. The common E-DCH resource herein may include a common E-DCH resource.

In the user equipment collision detection method according to this embodiment of the present invention, a user equipment sends a collision detection request on a common E-DCH to a base station, where the collision detection request carries a first RNTI corresponding to the user equipment; receives an acknowledgement message sent by the base station; and determines, according to the first RNTI and the acknowledgement message carrying AG information and a CRC code, whether the common E-DCH is an available resource. Therefore, when collision detection is performed after a cell handover of the user equipment, the first RNTI does not need to be updated, thereby reducing network resource wastes in the collision detection and shortening a collision detection delay.

FIG. 5 is a flowchart of another embodiment of a user equipment collision detection method according to the present invention. As shown in FIG. 5, the method includes:

501. A base station receives a collision detection request that is sent on a common enhanced uplink dedicated channel (E-DCH) by user equipment, where the collision detection request carries a first radio network temporary identifier (RNTI) corresponding to the user equipment.

In an implementation scenario, the base station may send a first broadcast message to the user equipment, where the first broadcast message carries common E-DCH resource information of a cell in which the user equipment is located. After selecting, according to the common E-DCH resource information, the common E-DCH for sending the collision detection request, the user equipment may send the collision detection request on the selected E-DCH to the base station. In another implementation scenario, the base station may send a second broadcast message to the user equipment, where the second broadcast message carries the common E-DCH resource information and an enhanced radio network temporary identifier (E-RNTI) list of a cell in which the user equipment is located. After determining an E-RNTI, in the cell in which the user equipment is located, corresponding to the first RNTI, the user equipment may send, to the base station on the common E-DCH, a collision detection request carrying the E-RNTI.

502. The base station determines whether the common E-DCH is occupied by other user equipment than the user equipment.

After receiving the collision detection request that is sent by the user equipment through the common E-DCH, the base station may determine whether the common E-DCH is occupied by other user equipment. If the common E-DCH is not occupied by other user equipment, the base station may send an acknowledgement message for the user equipment to the user equipment. If the common E-DCH is occupied by other user equipment, the base station may send an acknowledgement message of the other user equipment occupying the common E-DCH to the user equipment.

503. The base station sends an acknowledgement message to the user equipment according to a determining result, where the acknowledgement message carries absolute grant (AG) information and a cyclic redundancy check (CRC) code, so that the user equipment determines, according to the first RNTI, the AG information, and the CRC code, whether the common E-DCH is an available resource.

If the base station determines that the common E-DCH selected by the user equipment is not occupied by other user equipment, in a first implementation scenario, the base station may mask a cyclic redundancy check (CRC) code by using a first definition portion in the first RNTI, determine a second definition portion as the absolute grant (AG) information, and send the acknowledgement message including the AG information and the masked CRC code to the user equipment.

In a second implementation scenario, the base station may mask, by using the first RNTI, a sequence including the AG information and the CRC code, and send a masked sequence including the AG information and the CRC code to the user equipment.

In a third implementation scenario, the base station may generate a CRC code according to the AG information, where a quantity of bits in the CRC code generated by the base station is the same as a quantity of bits in the first RNTI, and the base station masks the CRC code by using the first RNTI, and sends the masked CRC code to the user equipment.

In a fourth implementation scenario, the base station may mask a CRC code by using an E-RNTI in the collision detection request sent by the user equipment, and send the acknowledgement message including the AG information and the masked CRC code to the user equipment.

If the base station determines that the common E-DCH is occupied by the other user equipment, the base station may send the acknowledgement message of the other user equipment occupying the common E-DCH to the user equipment. If the user equipment de-masks a CRC code in the acknowledgement message by using the E-RNTI, the de-masking is not successful, and the user equipment determines that the common E-DCH is occupied by the other user equipment and that the common E-DCH is not an available resource.

In the user equipment collision detection method according to this embodiment of the present invention, a base station receives a collision detection request that is sent on a common E-DCH by user equipment, where the collision detection request carries a first RNTI corresponding to the user equipment; determines whether the common E-DCH is occupied by other user equipment than the user equipment; and sends an acknowledgement message to the user equipment according to a determining result, so that the user equipment determines, according to the first RNTI and the acknowledgement message carrying AG information and a CRC code, whether the common E-DCH is an available resource. Therefore, when collision detection is performed after a cell handover of the user equipment, the first RNTI does not need to be updated, thereby reducing network resource wastes in the collision detection and shortening a collision detection delay.

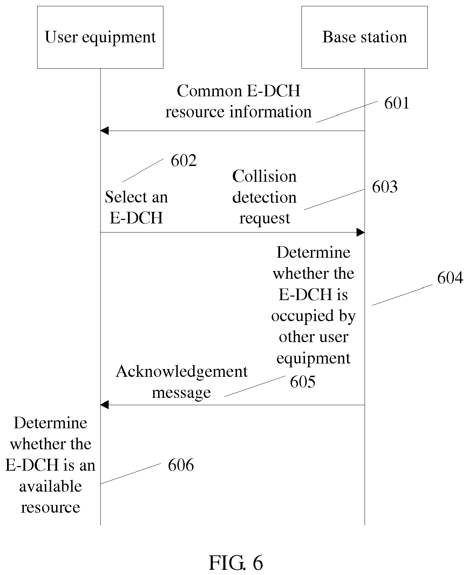

FIG. 6 is a flowchart of still another embodiment of a user equipment collision detection method according to the present invention, as shown in FIG. 6. In this embodiment, a specific implementation scenario is that a base station broadcasts common E-DCH resource information of a cell in which user equipment is located to the user equipment. The method includes:

601. The base station sends a first broadcast message to the user equipment, where the first broadcast message carries common E-DCH resource information of a cell in which the user equipment is located.

When the user equipment switches to a URA-PCH state and enters a UTRAN registration area URA, an RNC may allocate a first RNTI to the user equipment and broadcast the common E-DCH resource information of the cell in which the user equipment is located to the user equipment. The first RNTI is obtained by the radio network controller RNC by extending an E-RNTI in an enhanced radio network temporary identifier (E-RNTI) resource pool. In addition, when the user equipment is handed over between cells in the UTRAN registration area URA, the base station may broadcast the common E-DCH resource information of the cell in which the user equipment is currently located to the user equipment.

602. The user equipment selects a common E-DCH according to the common E-DCH resource information carried in the first broadcast message.

When the user equipment needs to transmit data to the base station or receive data transmitted by the base station, the user equipment selects a piece of E-DCH resource information from the common E-DCH resource information, so that the base station allocates a corresponding E-DCH resource to the user equipment according to the common E-DCH resource information.

603. The user equipment sends a collision detection request to the base station through the selected E-DCH, where the collision detection request carries the first RNTI corresponding to the user equipment.

Optionally, the first RNTI may include a first definition portion and a second definition portion. The first definition portion may be 16 bits, for example, a 16-bit E-RNTI before extension in FIG. 2; and the second definition portion may be 6 bits, for example, extension bits in FIG. 2. The user equipment may send the first RNTI in a form of a MAC protocol data unit (PDU) to the base station, where a MAC protocol data unit (PDU) header carries first RNTI information. In addition, the MAC PDU header may further carry indication information. The base station may determine, according to the indication information, whether the MAC PDU carries the first RNTI information. For example, when a value of the indication information in the MAC PDU header is 1, it indicates that the MAC PDU carries the first RNTI information; or when a value of the indication information in the MAC PDU header is 0, it indicates that the MAC PDU does not carry the first RNTI information. Optionally, the indication information may be located in a logical channel identifier in the MAC PDU.

604. After receiving the collision detection request sent by the user equipment, the base station determines whether the common E-DCH is occupied by other user equipment.

605. The base station sends an acknowledgement message to the user equipment according to a determining result, where the acknowledgement message carries absolute grant (AG) information and a cyclic redundancy check (CRC) code, so that the user equipment determines, according to the first RNTI, the AG information, and the CRC code, whether the common E-DCH is an available resource.

In a first implementation scenario, when the base station determines that the common E-DCH is not occupied by other user equipment, the base station masks a CRC code by using the first definition portion in the first RNTI, determines a value of the second definition portion in the first RNTI as the AG information, and sends the acknowledgement message including the AG information and the masked CRC code to the user equipment.

When the base station learns, by determining, that the common E-DCH is occupied by other user equipment, the base station masks a CRC code by using a first definition portion in a first RNTI corresponding to the other user equipment, determines a value of a second definition portion in the first RNTI corresponding to the other user equipment as AG information, and sends an acknowledgement message corresponding to the other user equipment and including the AG information and a masked CRC code to the user equipment.

In a second implementation scenario, when the base station learns, by determining, that the common E-DCH is not occupied by other user equipment, the base station may further mask, according to the first RNTI in the collision detection request of the user equipment, a sequence including the AG information and the CRC code, and send a masked sequence including the AG information and the CRC code to the user equipment.

In a third implementation scenario, when the base station learns, by determining, that the common E-DCH is not occupied by other user equipment, the base station may further generate a CRC code according to the AG information, where a quantity of bits in the CRC code generated by the base station is the same as a quantity of bits in the first RNTI, and the base station masks the CRC code by using the first RNTI, and sends the masked CRC code to the user equipment.

606. The user equipment determines, according to the first RNTI, the AG information, and the CRC code, whether the common E-DCH is an available resource.

In the first implementation scenario, after the base station masks the CRC code by using the first definition portion, determines the second definition portion as the AG information, and sends the acknowledgement message including the AG information and the masked CRC code to the user equipment, the user equipment may de-mask the masked CRC code in the acknowledgement message by using the first definition portion in the first RNTI, and check a de-masked CRC code. If the check is successful, the user equipment determines whether the second definition portion in the first RNTI is included in the AG information. If the second definition portion is included in the AG information, the user equipment determines that the common E-DCH is an available resource.

In the second implementation scenario, after the base station masks, by using the first RNTI, the sequence including the AG information and the CRC code, and sends the masked sequence including the AG information and the CRC code to the user equipment, the user equipment may de-mask, by using the first RNTI, the sequence including the AG information and the CRC code. If a CRC code is verified successfully, the user equipment determines that the common E-DCH is an available resource and uses the common E-DCH as its dedicated resource.

In the third implementation scenario, after the base station generates the CRC code according to the AG information, where the quantity of bits in the CRC code generated by the base station is the same as the quantity of bits in the first RNTI, and the base station masks the CRC code by using the first RNTI, and sends the masked CRC code to the user equipment, the user equipment may de-mask the masked CRC code by using an E-RNTI corresponding to the first RNTI, perform a CRC check, and if the check is successful, use the common E-DCH as its dedicated resource, so that the user equipment can use the common E-DCH to transmit data to the base station or receive data transmitted by the base station.

In the user equipment collision detection method according to this embodiment of the present invention, a user equipment sends a collision detection request on a common E-DCH to a base station, where the collision detection request carries a first RNTI corresponding to the user equipment; and the base station determines whether the common E-DCH is occupied by other user equipment, and if it is learned, by determining, that the common E-DCH is not occupied by the other user equipment, sends an acknowledgement message including a CRC code and AG information to the user equipment, so that the user equipment determines, according to the first RNTI and the acknowledgement message, whether the common E-DCH is an available resource. Therefore, when collision detection is performed after a cell handover of the user equipment, the first RNTI does not need to be updated, thereby reducing network resource wastes in the collision detection and shortening a collision detection delay.

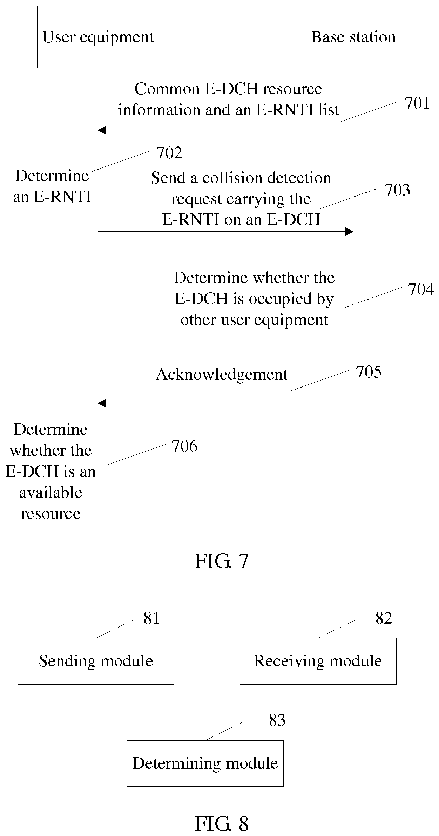

FIG. 7 is a flowchart of yet another embodiment of a user equipment collision detection method according to the present invention, as shown in FIG. 7. In this embodiment, a specific implementation scenario is that a base station broadcasts common E-DCH resource information and an enhanced radio network temporary identifier (E-RNTI) list of a cell in which user equipment is located to the user equipment. The method includes:
701. The base station sends a second broadcast message to the user equipment, where the second broadcast message carries common E-DCH resource information and an enhanced radio network temporary identifier (E-RNTI) list of a cell in which the user equipment is located.
702. The user equipment determines, according to the common E-DCH resource information and E-RNTI list that are carried in the second broadcast message, an E-RNTI corresponding to a first RNTI.
   When the user equipment needs to transmit data to the base station or receive data transmitted by the base station, the user equipment may use the first RNTI as a dividend and use a quantity of E-RNTIs in the E-RNTI list as a divisor, to acquire a corresponding remainder; and use an E-RNTI whose sequence number in the E-RNTI list is the remainder as the E-RNTI corresponding to the first RNTI.
703. The user equipment selects a common E-DCH from common E-DCH resources and sends a collision detection request on the common E-DCH to the base station, where the collision detection request carries the E-RNTI.
704. After receiving the collision detection request sent by the user equipment, the base station determines whether the common E-DCH is occupied by other user equipment.
705. The base station sends acknowledgement messageto the user equipment according to a determining result, where the acknowledgement message carries AG information and a CRC code.
   When the base station learns, by determining, that the common E-DCH is not occupied by other user equipment, the base station masks a CRC code by using the E-RNTI corresponding to the first RNTI and sends the acknowledgement message including the AG information and the masked CRC code to the user equipment.
   When the base station learns, by determining, that the common E-DCH is occupied by other user equipment, the base station masks a CRC code by using an E-RNTI corresponding to a first RNTI of the other user equipment and sends an acknowledgement message, for the other user equipment, including the AG information and a masked CRC code to the user equipment.
706. The user equipment determines, according to the first RNTI, the AG information, and the CRC code, whether the common E-DCH is an available resource.

The user equipment may de-mask the CRC code in the acknowledgement message by using the E-RNTI corresponding to the first RNTI, and check a de-masked CRC code obtained. If the check is successful, the user equipment determines that the common E-DCH is an available resource.

In the user equipment collision detection method according to this embodiment of the present invention, a user equipment sends a collision detection request on a common E-DCH to a base station, where the collision detection request carries a first RNTI corresponding to the user equipment; the base station determines whether the common E-DCH is occupied by other user equipment, and if it is learned, by determining, that the common E-DCH is not occupied by other user equipment, sends an acknowledgement message carrying AG information and a CRC code to the user equipment; and the user equipment determines, according to an E-RNTI corresponding to the first RNTI and the acknowledgement message, whether the common E-DCH is an available resource. Therefore, when collision detection is performed after a cell handover of the user equipment, the first RNTI does not need to be updated, thereby reducing network resource wastes in the collision detection and shortening a collision detection delay.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disc, or an optical disc.

FIG. 8 is a schematic structural diagram of an embodiment of user equipment according to the present invention. As shown in FIG. 8, the user equipment includes a sending module 81, a receiving module 82, and a determining module 83.

The sending module 81 is configured to send a collision detection request on a common enhanced uplink dedicated channel (E-DCH) to a base station, where the collision detection request carries a first radio network temporary identifier (RNTI) corresponding to the user equipment, so that the base station determines whether the common E-DCH is occupied by other user equipment than the user equipment.

In a first implementation scenario, before the sending module 81 sends the collision detection request on the common enhanced uplink dedicated channel (E-DCH) to the base station, the receiving module 82 receives a first broadcast message sent by the base station, where the first broadcast message carries common E-DCH resource information of a cell in which the user equipment is located, so that the user equipment may select, according to the common E-DCH resource information, the common E-DCH for sending the collision detection request.

In a second implementation scenario, before the sending module 81 sends the collision detection request on the common enhanced uplink dedicated channel (E-DCH) to the base station, the receiving module 82 receives a second broadcast message sent by the base station, where the second broadcast message carries common E-DCH resource information and an enhanced radio network temporary identifier (E-RNTI) list of the cell in which the user equipment is located, so that after the user equipment determines, according to the first RNTI, a corresponding E-RNTI in the cell in which the user equipment is located, the user equipment sends a collision detection request carrying the E-RNTI to the base station through the common E-DCH.

Further, in the second implementation scenario, the determining module 83 is configured to: use a value of the first RNTI as a dividend and use a quantity of E-RNTIs in the E-RNTI list as a divisor, to acquire a corresponding remainder; and acquire an enhanced radio network temporary identifier (E-RNTI) whose sequence number in the E-RNTI list is the remainder.

The receiving module 82 is configured to receive an acknowledgement message sent by the base station, where the acknowledgement message carries AG information and a CRC code.

The determining module 83 is configured to determine, according to the first RNTI, the AG information, and the CRC code, whether the common E-DCH is an available resource.

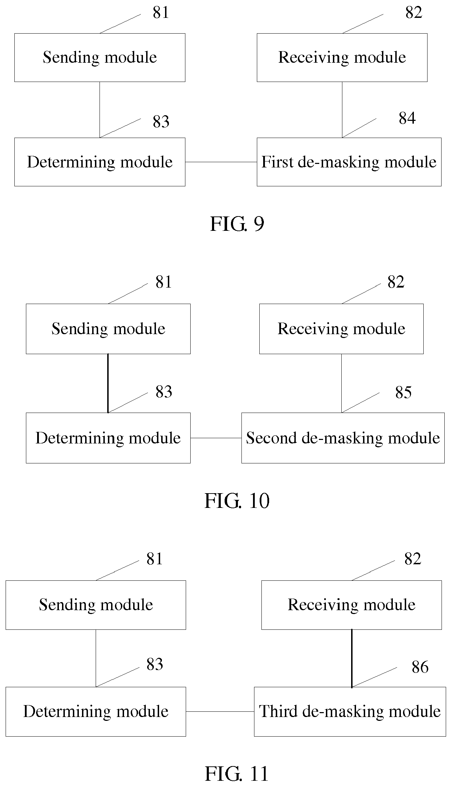

In the first implementation scenario, the first RNTI includes a first definition portion and a second definition portion; the user equipment may further include a first de-masking module 84, as shown in FIG. 9, configured to de-mask the CRC code in the acknowledgement message code by using the first definition portion, and check a de-masked CRC code; and the determining module 83 is further configured to check the de-masked CRC code, and if the check is successful and the second definition portion is included in the AG information, determine that the common E-DCH is an available resource.

In the second implementation scenario, the user equipment may further include a second de-masking module 85, as shown in FIG. 10, configured to de-mask, by using the first RNTI, a sequence including the AG information and the CRC code; and if a CRC code is verified successfully, the user equipment determines that the common E-DCH is an available resource and uses the common E-DCH as its dedicated resource.

In a third implementation scenario, the user equipment may further include a third de-masking module 86, as shown in FIG. 11, configured to de-mask the CRC code by using the first RNTI; and if a CRC code is verified successfully, the user equipment determines that the common E-DCH is an available resource and uses the common E-DCH as its dedicated resource.

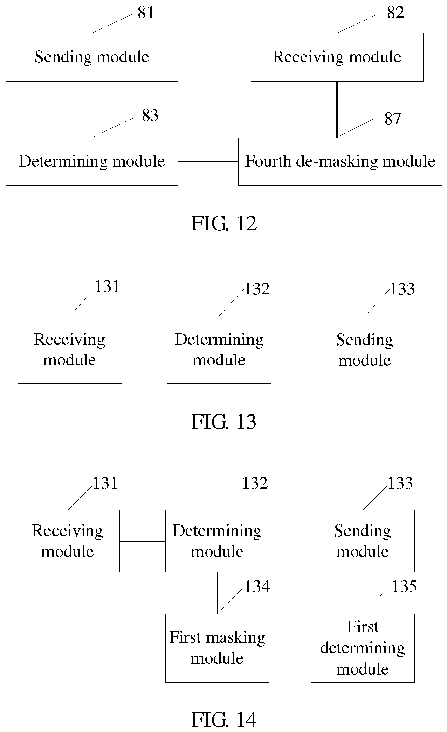

In another implementation scenario, the user equipment may further include a fourth de-masking module 87, as shown in FIG. 12, configured to de-mask the CRC code in the acknowledgement message by using the E-RNTI, in the cell in which the user equipment is located, corresponding to the first RNTI; and the determining module 83 is further configured to check a de-masked CRC code, and if the check is successful, determine that the common E-DCH is an available resource.

In addition, after the determining module 83 determines that the common E-DCH is an available resource, data transmission with the base station can be performed by using the E-RNTI corresponding to the common E-DCH.

In this embodiment of the present invention, a user equipment sends a collision detection request on a common E-DCH to a base station, where the collision detection request carries a first RNTI corresponding to the user equipment; receives an acknowledgement message sent by the base station; and determines, according to the first RNTI and the acknowledgement message, whether the common E-DCH is an available resource. Therefore, when collision detection is performed after a cell handover of the user equipment, the first RNTI does not need to be updated, thereby reducing network resource wastes in the collision detection and shortening a collision detection delay.

FIG. 13 is a schematic structural diagram of an embodiment of a base station according to the present invention. As shown in FIG. 13, the base station includes a receiving module 131, a determining module 132, and a sending module 133.

The receiving module 131 is configured to receive a collision detection request that is sent on a common enhanced uplink dedicated channel (E-DCH) by user equipment, where the collision detection request carries a first radio network temporary identifier (RNTI) corresponding to the user equipment.

In an implementation scenario, before the receiving module 131 receives the collision detection request that is sent on the common enhanced uplink dedicated channel (E-DCH) by the user equipment, the sending module 133 is configured to send a first broadcast message to the user equipment, where the first broadcast message carries common E-DCH resource information of a cell in which the user equipment is located, so that the user equipment selects, according to the common E-DCH resource information, the common E-DCH for sending the collision detection request.

In another implementation scenario, before the receiving module 131 receives the collision detection request that is sent on the common enhanced uplink dedicated channel (E-DCH) by the user equipment, the sending module 133 is further configured to send a second broadcast message to the user equipment, where the second broadcast message carries common E-DCH resource information and an enhanced radio network temporary identifier (E-RNTI) list of the cell in which the user equipment is located, so that the user equipment determines the common E-DCH for sending the collision detection request, determines an E-RNTI, in the cell in which the user equipment is located, corresponding to the first RNTI, and sends a collision detection request carrying the E-RNTI to the base station through the common E-DCH.

The determining module 132 is configured to determine whether the common E-DCH is occupied by other user equipment than the user equipment.

The sending module 133 is configured to send an acknowledgement message to the user equipment according to a determining result, where the acknowledgement message carries AG information and a CRC code, so that the user equipment determines, according to the first RNTI, the AG information, and the CRC code, whether the common E-DCH is an available resource.

In a first implementation scenario, the first RNTI includes a first definition portion and a second definition portion; the base station further includes a first masking module 134 and a first determining module 135, as shown in FIG. 14; and before the sending module 133 sends the acknowledgement message to the user equipment, the first masking module 134 is configured to mask a cyclic redundancy check (CRC) code by using the first definition portion, and the first determining module 135 is configured to determine the second definition portion as the absolute grant (AG) information, to obtain the acknowledgement message including the AG information and the masked CRC code.

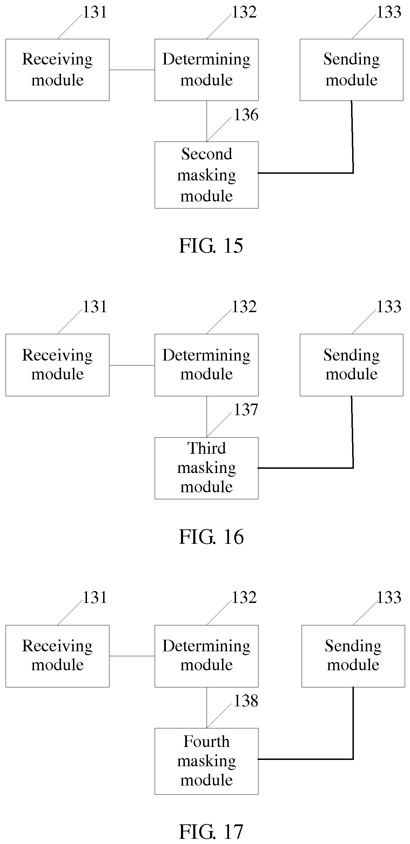

In a second implementation scenario, the base station further includes a second masking module 136, as shown in FIG. 15; and before the sending module 133 sends the acknowledgement message to the user equipment, the second masking module 136 masks, by using the first RNTI, a sequence including the AG information and the CRC code, and the sending module 133 sends a masked sequence including the AG information and the CRC code to the user equipment.

In a third implementation scenario, the base station further includes a third masking module 137, as shown in FIG. 16; and before the sending module 133 sends the acknowledgement message to the user equipment, the third masking module 137 masks a CRC code by using the first RNTI, and the masked CRC code is sent to the user equipment.

In another fourth implementation scenario, the base station further includes a fourth masking module 138, as shown in FIG. 17; and before the sending module 133 sends the acknowledgement message to the user equipment, the fourth masking module 138 is configured to mask a CRC code by using the E-RNTI, in the cell in which the user equipment is located, corresponding to the first RNTI. After the sending module 133 sends the acknowledgement message to the user equipment, the user equipment may determine, according to the E-RNTI corresponding to the first RNTI and the acknowledgement message carrying the AG information and the CRC code, whether the common E-DCH is an available resource.

In this embodiment of the present invention, a base station receives a collision detection request that is sent on a common E-DCH by user equipment, where the collision detection request carries a first RNTI corresponding to the user equipment; determines whether the common E-DCH is occupied by other user equipment than the user equipment; and sends an acknowledgement message to the user equipment according to a determining result, so that the user equipment determines, according to the first RNTI and the acknowledgement message, whether the common E-DCH is an available resource. Therefore, when collision detection is performed after a cell handover of the user equipment, the first RNTI does not need to be updated, thereby reducing network resource wastes in the collision detection and shortening a collision detection delay.

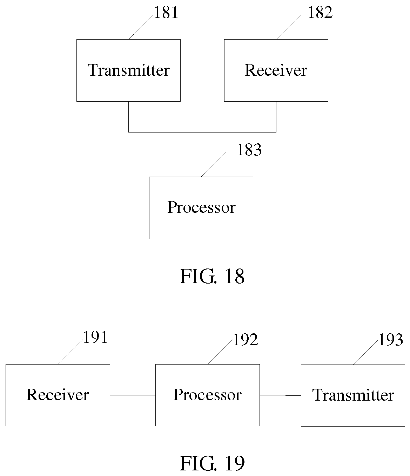

FIG. 18 is a schematic structural diagram of an embodiment of user equipment according to the present invention. As shown in FIG. 18, the user equipment includes a transmitter 181, a receiver 182, and a processor 183.

The transmitter 181 is configured to send a collision detection request on a common enhanced uplink dedicated channel (E-DCH) to a base station, where the collision detection request carries a first radio network temporary identifier (RNTI) corresponding to the user equipment, so that the base station determines whether the common E-DCH is occupied by other user equipment than the user equipment.

In a first implementation scenario, before the transmitter 181 sends the collision detection request on the common enhanced uplink dedicated channel (E-DCH) to the base station, the receiver 182 receives a first broadcast message sent by the base station, where the first broadcast message carries common E-DCH resource information of a cell in which the user equipment is located, so that the user equipment may select, according to the common E-DCH resource information, the common E-DCH for sending the collision detection request.

In a second implementation scenario, before the transmitter 181 sends the collision detection request on the common enhanced uplink dedicated channel (E-DCH) to the base station, the receiver 182 receives a second broadcast message sent by the base station, where the second broadcast message carries common E-DCH resource information and an enhanced radio network temporary identifier (E-RNTI) list of the cell in which the user equipment is located, so that after the user equipment determines, according to the first RNTI, a corresponding E-RNTI in the cell in which the user equipment is located, the user equipment sends a collision detection request carrying the E-RNTI to the base station through the common E-DCH.

Further, in the second implementation scenario, a processor 183 is configured to: use a value of the first RNTI as a dividend and use a quantity of E-RNTIs in the E-RNTI list as a divisor, to acquire a corresponding remainder; and acquire an enhanced radio network temporary identifier (E-RNTI) whose sequence number in the E-RNTI list is the remainder.

The receiver 182 is configured to receive an acknowledgement message sent by the base station, where the acknowledgement message carries AG information and a CRC code.

The processor 183 is configured to determine, according to the first RNTI, the AG information, and the CRC code, whether the common E-DCH is an available resource.

Optionally, in the first implementation scenario, the first RNTI includes a first definition portion and a second definition portion; the processor 183 is further configured to de-mask the CRC code by using the first definition portion, and check a de-masked CRC code; and if the check is successful and the second definition portion is included in the AG information, the processor 183 is further configured to determine that the common E-DCH is an available resource.

Optionally, in the second implementation scenario, the processor 183 is further configured to de-mask, by using the first RNTI, a sequence including the AG information and the CRC code; and if a CRC code is verified successfully, the user equipment determines that the common E-DCH is an available resource.

Optionally, in a third implementation scenario, the processor 183 is further configured to de-mask the CRC code by using the first RNTI; and if a CRC code is verified successfully, the user equipment determines that the common E-DCH is an available resource and uses the common E-DCH as its dedicated resource.

In a fourth implementation scenario, the processor 183 is further configured to de-mask the CRC code in the acknowledgement message by using the E-RNTI, in the cell in which the user equipment is located, corresponding to the first RNTI; and if a CRC code is verified successfully, the processor 183 is further further configured to determine that the common E-DCH is an available resource.

In addition, after the processor 183 determines that the common E-DCH is an available resource, data transmission with the base station can be performed by using the E-RNTI corresponding to the common E-DCH.

In this embodiment of the present invention, a user equipment sends a collision detection request on a common E-DCH to a base station, where the collision detection request carries a first RNTI corresponding to the user equipment, receives an acknowledgement message sent by the base station, and determines, according to the first RNTI and the acknowledgement message, whether the common E-DCH is an available resource. Therefore, when collision detection is performed after a cell handover of the user equipment, the first RNTI does not need to be updated, thereby reducing network resource wastes in the collision detection and shortening a collision detection delay.

FIG. 19 is a schematic structural diagram of an embodiment of a base station according to the present invention. As shown in FIG. 19, the base station includes a receiver 191, a processor 192, and a transmitter 193.

The receiver 191 is configured to receive a collision detection request that is sent on a common enhanced uplink dedicated channel (E-DCH) by user equipment, where the collision detection request carries a first radio network temporary identifier (RNTI) corresponding to the user equipment.

In an implementation scenario, before the receiver 191 receives the collision detection request that is sent on the common enhanced uplink dedicated channel (E-DCH) by the user equipment, the transmitter 193 is configured to send a first broadcast message to the user equipment, where the first broadcast message carries common E-DCH resource information of a cell in which the user equipment is located, so that the user equipment selects, according to the common E-DCH resource information, the common E-DCH for sending the collision detection request.

In another implementation scenario, before the receiver 191 receives the collision detection request that is sent on the common enhanced uplink dedicated channel (E-DCH) by the user equipment, the transmitter 193 is further configured to send a second broadcast message to the user equipment, where the second broadcast message carries common E-DCH resource information and an enhanced radio network temporary identifier (E-RNTI) list of the cell in which the user equipment is located, so that the user equipment determines the common E-DCH for sending the collision detection request, determines an E-RNTI, in the cell in which the user equipment is located, corresponding to the first RNTI, and sends a collision detection request carrying the E-RNTI to the base station through the common E-DCH.

The processor 192 is configured to determine whether the common E-DCH is occupied by other user equipment than the user equipment.

The transmitter 193 is configured to send an acknowledgement message to the user equipment according to a determining result, where the acknowledgement message carries AG information and a CRC code, so that the user equipment determines, according to the first RNTI, the AG information, and the CRC code, whether the common E-DCH is an available resource.

In a first implementation scenario, the first RNTI includes a first definition portion and a second definition portion; and before the transmitter 193 sends the acknowledgement message to the user equipment according to a determining result, the processor 192 is further configured to mask a cyclic redundancy check (CRC) code by using the first definition portion, and determine that the second definition portion is the absolute grant (AG) information, to obtain the acknowledgement message including the AG information and the masked CRC code.

In a second implementation scenario, before the transmitter 193 sends the acknowledgement message to the user equipment according to a determining result, the processor 192 is further configured to mask, by using the first RNTI, a sequence including the AG information and the CRC code, and the transmitter 193 sends a masked sequence including the AG information and the CRC code to the user equipment.

In a third implementation scenario, before the transmitter 193 sends the acknowledgement message to the user equipment according to a determining result, the processor 192 is further configured to mask a CRC code by using the first RNTI, and the masked CRC code is sent to the user equipment.

In a fourth implementation scenario, before the transmitter 193 sends the acknowledgement message to the user equipment according to a determining result, the processor 192 is further configured to mask the CRC code by using the E-RNTI, in the cell in which the user equipment is located, corresponding to the first RNTI. After the transmitter 193 sends the acknowledgement message to the user equipment, the user equipment may determine, according to the E-RNTI corresponding to the first RNTI and the acknowledgement message carrying the AG information and the CRC code, whether the common E-DCH is an available resource.

In this embodiment of the present invention, a base station receives a collision detection request that is sent on a common E-DCH by user equipment, where the collision detection request carries a first RNTI corresponding to the user equipment; determines whether the common E-DCH is occupied by other user equipment than the user equipment; and sends an acknowledgement message to the user equipment according to a determining result, so that the user equipment determines, according to the first RNTI and the acknowledgement message, whether the common E-DCH is an available resource. Therefore, when collision detection is performed after a cell handover of the user equipment, the first RNTI does not need to be updated, thereby reducing network resource wastes in the collision detection and shortening a collision detection delay.

It may be clearly understood by a person skilled in the art that, for the purpose of convenient and brief description, division of the foregoing functional modules is only an example for illustration. In actual application, the foregoing functions can be allocated to different functional modules and implemented as required, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM), a random access memory (RAM), a magnetic disk, or an optical disc.

The foregoing embodiments are only used to describe the technical solutions of the present application in detail. However, the description of the foregoing embodiments is only used to help understand the method and core idea of the present invention, and shall not be understood as a limitation on the present invention. Any variation or replacement readily figured out by a person skilled in the art within the technical scope disclosed in the present invention shall fall within the protection scope of the present invention.

## Claims

1. A user equipment collision detection method, comprising:
sending (101), by user equipment, a collision detection request on a common enhanced uplink dedicated channel, E-DCH, to a base station, wherein the collision detection request carries a first radio network temporary identifier, RNTI, corresponding to the user equipment, so that the base station determines whether the common E-DCH is occupied by other user equipment than the user equipment;
receiving (102), by the user equipment, an acknowledgement message sent by the base station, wherein the acknowledgement message carries absolute grant, AG, information and a cyclic redundancy check, CRC, code; and
determining (103), by the user equipment according to the first RNTI, the AG information, and the CRC code, whether the common E-DCH is an available resource.
**characterized in that** the first RNTI comprises a first definition portion and a second definition portion; and
the method further comprises:
de-masking, by the user equipment, the CRC code by using the first definition portion; and
if a CRC code is verified successfully, and the second definition portion is comprised in the AG information, determining, by the user equipment, that the common E-DCH is an available resource.

2. The method according to claim 1, wherein method further comprises:
de-masking, by the user equipment by using the first RNTI, a sequence comprising the AG information and the CRC code; and
if a CRC code is verified successfully, determining, by the user equipment, that the common E-DCH is an available resource.

3. The method according to claim 1, wherein method further comprises:
determining, by the user equipment, an enhanced radio network temporary identifier, E-RNTI, of a cell in which the user equipment is located, corresponding to the first RNTI; and
sending, by the user equipment to the base station on the common E-DCH, a collision detection request carrying the E-RNTI.

4. The method according to any one of claims 1 to 3, wherein the first broadcast message or the second broadcast message further carries an enhanced radio network temporary identifier, E-RNTI, corresponding to the common E-DCH resource information; and
after determining that the common E-DCH is an available resource, the method further comprises:
performing, by the user equipment, data transmission with the base station by using the E-RNTI corresponding to the common E-DCH.

5. A user equipment collision detection method, comprising:
receiving (501), by a base station, a collision detection request that is sent on a common enhanced uplink dedicated channel, E-DCH, by user equipment, wherein the collision detection request carries a first radio network temporary identifier, RNTI, corresponding to the user equipment;
determining (502), by the base station, whether the common E-DCH is occupied by other user equipment than the user equipment; and
sending (503), by the base station, an acknowledgement message to the user equipment according to a determining result, wherein the acknowledgement message carries absolute grant, AG, information and a cyclic redundancy check, CRC, code, so that the user equipment determines, according to the first RNTI, the AG information, and the CRC code, whether the common E-DCH is an available resource.
**characterized in that** the first RNTI comprises a first definition portion and a second definition portion; and
before the sending, by the base station, an acknowledgement message to the user equipment according to the determining result, the method further comprises:
masking, by the base station, the CRC code by using the first definition portion; and
determining, by the base station, the second definition portion as the AG information.

6. The method according to claim 5, wherein before the sending, by the base station, an acknowledgement message to the user equipment according to the determining result, the method further comprises:
masking, by the base station by using the first RNTI, a sequence comprising the AG information and the CRC code.

7. The method according to claim 5, wherein before the sending, by the base station, an acknowledgement message to the user equipment according to the determining result, the method further comprises:
masking, by the base station, the CRC code by using the first RNTI.

8. The method according to claim 5, wherein if the collision detection request carries an enhanced radio network temporary identifier, E-RNTI, in a cell in which the user equipment is located, corresponding to the first RNTI, before the sending, by the base station, an acknowledgement message to the user equipment according to the determining result, the method further comprises:
masking, by the base station, the CRC code by using the E-RNTI.

9. User equipment, comprising:
a sending module (81), configured to send a collision detection request on a common enhanced uplink dedicated channel, E-DCH, to a base station, wherein the collision detection request carries a first radio network temporary identifier, RNTI, corresponding to the user equipment, so that the base station determines whether the common E-DCH is occupied by other user equipment than the user equipment;
a receiving module (82), configured to receive an acknowledgement message sent by the base station, wherein the acknowledgement message carries absolute grant, AG, information and a cyclic redundancy check, CRC, code; and
a determining module (83), configured to determine, according to the first RNTI, the AG information, and the CRC code, whether the common E-DCH is an available resource.
**characterized in that** the first RNTI comprises a first definition portion and a second definition portion;
the user equipment further comprises a first de-masking module (84), configured to de-mask the CRC code by using the first definition portion; and
if a CRC code is verified successfully, and the second definition portion is comprised in the AG information, the determining module (83) is further configured to determine that the common E-DCH is an available resource.

10. The user equipment according to claim 9, wherein the user equipment further comprises a second de-masking module (85), configured to de-mask, by using the first RNTI, a sequence comprising the AG information and the CRC code; and
if a CRC code is verified successfully, the determining module (83) is further configured to determine that the common E-DCH is an available resource.

11. The user equipment according to claim 9, wherein the determining module (83) is further configured to determine an enhanced radio network temporary identifier, E-RNTI, in a cell in which the user equipment is located, corresponding to the first RNTI; and
the sending module (81) is further configured to send, to the base station on the common E-DCH, a collision detection request carrying the E-RNTI.

12. The user equipment according to any one of claims 9 to 11, wherein the first broadcast message or the second broadcast message may further carry an enhanced radio network temporary identifier, E-RNTI, corresponding to the common E-DCH resource information; and
after the determining module (83) determines that the common E-DCH is an available resource, data transmission with the base station is performed by using the E-RNTI corresponding to the common E-DCH.

13. A base station, comprising:
a receiving module (131), configured to receive a collision detection request that is sent on a common enhanced uplink dedicated channel, E-DCH, by user equipment, wherein the collision detection request carries a first radio network temporary identifier, RNTI, corresponding to the user equipment;
a determining module (132), configured to determine whether the common E-DCH is occupied by other user equipment than the user equipment; and
a sending module (133), configured to send an acknowledgement message to the user equipment according to the determining result, wherein the acknowledgement message carries absolute grant (AG) information and a cyclic redundancy check, CRC, code, so that the user equipment determines, according to the first RNTI, the AG information, and the CRC code, whether the common E-DCH is an available resource.
**characterized in that** the first RNTI comprises a first definition portion and a second definition portion, and the base station further comprises:
a first masking module (134), configured to mask a CRC code by using the first definition portion before the sending module sends the acknowledgement message to the user equipment according to the determining result; and
a first determining module (135), configured to determine the second definition portion as the AG information before the sending module sends the acknowledgement message to the user equipment according to the determining result.

14. The base station according to claim 13, wherein before the sending module (133) sends the acknowledgement message to the user equipment according to the determining result, the base station further comprises:
a second masking module (136), configured to mask, by using the first RNTI, a sequence comprising the AG information and the CRC code.

15. The base station according to claim 13, wherein before the sending module (133) sends the acknowledgement message to the user equipment according to the determining result, the base station further comprises:
a third masking module (137), configured to mask the CRC code by using the first RNTI.

16. The base station according to claim 13, wherein if the collision detection request carries an enhanced radio network temporary identifier, E-RNTI, in a cell in which the user equipment is located, corresponding to the first RNTI, before the sending module (133) sends the acknowledgement message to the user equipment according to the determining result, the base station further comprises a fourth masking module (138), wherein:
the fourth masking module (138) is configured to mask the CRC code by using the E-RNTI.

## Patentansprüche

1. Benutzerendgerätkollisionserkennungsverfahren, das Folgendes umfasst:
Senden (101) einer Kollisionserkennungsanfrage durch ein Benutzerendgerät auf einem gemeinsamen "Enhanced Uplink Dedicated Channel", E-DCH, an eine Basisstation, wobei die Kollisionserkennungsanfrage einen ersten "Radio Network Temporary Identifier", RNTI, mit Entsprechung zum Benutzerendgerät führt, damit die Basisstation ermittelt, ob der gemeinsame E-DCH von einem anderen Benutzerendgerät als dem Benutzerendgerät belegt wird;
Empfangen (102) einer durch die Basisstation gesendeten Bestätigungsnachricht durch das Benutzerendgerät, wobei die Bestätigungsnachricht Informationen zu einer "Absolute Grant", AG, und einen Code einer zyklischen Redundanzprüfung, CRC, führt; und
Ermitteln (103) durch das Benutzerendgerät gemäß dem ersten RNTI, den AG-Informationen und dem CRC-Code, ob der gemeinsame E-DCH eine verfügbare Ressource ist;
**dadurch gekennzeichnet, dass** der erste RNTI einen ersten Definitionsabschnitt und einen zweiten Definitionsabschnitt umfasst; und
das Verfahren ferner Folgendes umfasst:
Demaskieren des CRC-Codes durch das Benutzerendgerät durch Verwendung des ersten Definitionsabschnitts; und,
falls ein CRC-Code erfolgreich überprüft wird und der zweite Definitionsabschnitt in den AG-Informationen umfasst ist, Ermitteln durch das Benutzerendgerät, dass der gemeinsame E-DCH eine verfügbare Ressource ist.

2. Verfahren nach Anspruch 1, wobei das Verfahren ferner Folgendes umfasst:
Demaskieren einer die AG-Informationen und den CRC-Code umfassenden Folge durch das Benutzerendgerät durch Verwendung des ersten RNTI; und,
falls ein CRC-Code erfolgreich überprüft wird, Ermitteln durch das Benutzerendgerät, dass der gemeinsame E-DCH eine verfügbare Ressource ist.

3. Verfahren nach Anspruch 1, wobei das Verfahren ferner Folgendes umfasst:
Ermitteln eines "Enhanced Radio Network Temporary Identifier", E-RNTI, einer Zelle, in der sich das Benutzerendgerät befindet, mit Entsprechung zum ersten RNTI durch das Benutzerendgerät; und
Senden einer den E-RNTI führenden Kollisionserkennungsanfrage durch das Benutzerendgerät auf dem gemeinsamen E-DCH an die Basisstation.

4. Verfahren nach einem der Ansprüche 1 bis 3, wobei die erste rundgesendete Nachricht oder die zweite rundgesendete Nachricht ferner einen "Enhanced Radio Network Temporary Identifier", E-RNTI, mit Entsprechung zu den Informationen zur gemeinsamen E-DCH-Ressource führt; und
das Verfahren nach dem Ermitteln, dass der gemeinsame E-DCH eine verfügbare Ressource ist, ferner Folgendes umfasst:
Durchführen einer Datenübertragung durch das Benutzerendgerät mit der Basisstation durch Verwendung des E-RNTI mit Entsprechung zum gemeinsamen E-DCH.

5. Benutzerendgerätkollisionserkennungsverfahren, das Folgendes umfasst:
Empfangen (501) einer Kollisionserkennungsanfrage, die auf einem gemeinsamen "Enhanced Uplink Dedicated Channel", E-DCH, durch ein Benutzerendgerät gesendet wird, durch eine Basisstation, wobei die Kollisionserkennungsanfrage einen ersten "Radio Network Temporary Identifier", RNTI, mit Entsprechung zum Benutzerendgerät führt;
Ermitteln (502) durch die Basisstation, ob der gemeinsame E-DCH von einem anderen Benutzerendgerät als dem Benutzerendgerät belegt wird; und
Senden (503) einer Bestätigungsnachricht durch die Basisstation an das Benutzerendgerät gemäß einem Ermittlungsergebnis, wobei die Bestätigungsnachricht Informationen zu einer "Absolute Grant", AG, und einen Code einer zyklischen Redundanzprüfung, CRC, führt, damit das Benutzerendgerät gemäß dem ersten RNTI, den AG-Informationen und dem CRC-Code ermittelt, ob der gemeinsame E-DCH eine verfügbare Ressource ist;
**dadurch gekennzeichnet, dass** der erste RNTI einen ersten Definitionsabschnitt und einen zweiten Definitionsabschnitt umfasst; und
das Verfahren vor dem Senden einer Bestätigungsnachricht durch die Basisstation an das Benutzerendgerät gemäß dem Ermittlungsergebnis ferner Folgendes umfasst:
Maskieren des CRC-Codes durch die Basisstation durch Verwendung des ersten Definitionsabschnitts; und
Ermitteln des zweiten Definitionsabschnitts als die AG-Informationen durch die Basisstation.

6. Verfahren nach Anspruch 5, wobei das Verfahren vor dem Senden einer Bestätigungsnachricht durch die Basisstation an das Benutzerendgerät gemäß dem Ermittlungsergebnis ferner Folgendes umfasst:
Maskieren einer die AG-Informationen und den CRC-Code umfassenden Folge durch die Basisstation durch Verwendung des ersten RNTI.

7. Verfahren nach Anspruch 5, wobei das Verfahren vor dem Senden einer Bestätigungsnachricht durch die Basisstation an das Benutzerendgerät gemäß dem Ermittlungsergebnis ferner Folgendes umfasst:
Maskieren des CRC-Codes durch die Basisstation durch Verwendung des ersten RNTI.

8. Verfahren nach Anspruch 5, wobei das Verfahren, falls die Kollisionserkennungsanfrage einen "Enhanced Radio Network Temporary Identifier", E-RNTI, in einer Zelle, in der sich das Benutzerendgerät befindet, mit Entsprechung zum ersten RNTI führt, vor dem Senden einer Bestätigungsnachricht durch die Basisstation an das Benutzerendgerät gemäß dem Ermittlungsergebnis ferner Folgendes umfasst:
Maskieren des CRC-Codes durch die Basisstation durch Verwendung des E-RNTI.

9. Benutzerendgerät, das Folgendes umfasst:
ein Sendemodul (81), das konfiguriert ist zum Senden einer Kollisionserkennungsanfrage auf einem gemeinsamen "Enhanced Uplink Dedicated Channel", E-DCH, an eine Basisstation, wobei die Kollisionserkennungsanfrage einen ersten "Radio Network Temporary Identifier", RNTI, mit Entsprechung zum Benutzerendgerät führt, damit die Basisstation ermittelt, ob der gemeinsame E-DCH von einem anderen Benutzerendgerät als dem Benutzerendgerät belegt wird;
ein Empfangsmodul (82), das konfiguriert ist zum Empfangen einer durch die Basisstation gesendeten Bestätigungsnachricht, wobei die Bestätigungsnachricht Informationen zu einer "Absolute Grant", AG, und einen Code einer zyklischen Redundanzprüfung, CRC, führt; und
ein Ermittlungsmodul (83), das konfiguriert ist zum Ermitteln gemäß dem ersten RNTI, den AG-Informationen und dem CRC-Code, ob der gemeinsame E-DCH eine verfügbare Ressource ist;
**dadurch gekennzeichnet, dass** der erste RNTI einen ersten Definitionsabschnitt und einen zweiten Definitionsabschnitt umfasst;
das Benutzerendgerät ferner ein erstes Demaskierungsmodul (84) umfasst, das konfiguriert ist zum Demaskieren des CRC-Codes durch Verwendung des ersten Definitionsabschnitts; und,
falls ein CRC-Code erfolgreich überprüft wird und der zweite Definitionsabschnitt in den AG-Informationen umfasst ist, das Ermittlungsmodul (83) ferner konfiguriert ist zum Ermitteln, dass der gemeinsame E-DCH eine verfügbare Ressource ist.

10. Benutzerendgerät nach Anspruch 9, wobei das Benutzerendgerät ferner ein zweites Demaskierungsmodul (85) umfasst, das konfiguriert ist zum Demaskieren einer die AG-Informationen und den CRC-Code umfassenden Folge durch Verwendung des ersten RNTI; und,
falls ein CRC-Code erfolgreich überprüft wird, das Ermittlungsmodul (83) ferner konfiguriert ist zum Ermitteln, dass der gemeinsame E-DCH eine verfügbare Ressource ist.

11. Benutzerendgerät nach Anspruch 9, wobei das Ermittlungsmodul (83) ferner konfiguriert ist zum Ermitteln eines "Enhanced Radio Network Temporary Identifier", E-RNTI, in einer Zelle, in der sich das Benutzerendgerät befindet, mit Entsprechung zum ersten RNTI; und
das Sendemodul (81) ferner konfiguriert ist zum Senden einer den E-RNTI führenden Kollisionserkennungsanfrage auf dem gemeinsamen E-DCH an die Basisstation.

12. Benutzerendgerät nach einem der Ansprüche 9 bis 11, wobei die erste rundgesendete Nachricht oder die zweite rundgesendete Nachricht ferner einen "Enhanced Radio Network Temporary Identifier", E-RNTI, mit Entsprechung zu den Informationen zur gemeinsamen E-DCH-Ressource führen kann; und,
nachdem das Ermittlungsmodul (83) ermittelt hat, dass der gemeinsame E-DCH eine verfügbare Ressource ist, eine Datenübertragung mit der Basisstation durch Verwendung des E-RNTI mit Entsprechung zum gemeinsamen E-DCH durchgeführt wird.

13. Basisstation, die Folgendes umfasst:
ein Empfangsmodul (131), das konfiguriert ist zum Empfangen einer Kollisionserkennungsanfrage, die auf einem gemeinsamen "Enhanced Uplink Dedicated Channel", E-DCH, durch ein Benutzerendgerät gesendet wird, wobei die Kollisionserkennungsanfrage einen ersten "Radio Network Temporary Identifier", RNTI, mit Entsprechung zum Benutzerendgerät führt;
ein Ermittlungsmodul (132), das konfiguriert ist zum Ermitteln, ob der gemeinsame E-DCH von einem anderen Benutzerendgerät als dem Benutzerendgerät belegt wird; und
ein Sendemodul (133), das konfiguriert ist zum Senden einer Bestätigungsnachricht an das Benutzerendgerät gemäß dem Ermittlungsergebnis, wobei die Bestätigungsnachricht Informationen zu einer "Absolute Grant", AG, und einen Code einer zyklischen Redundanzprüfung, CRC, führt, damit das Benutzerendgerät gemäß dem ersten RNTI, den AG-Informationen und dem CRC-Code ermittelt, ob der gemeinsame E-DCH eine verfügbare Ressource ist;
**dadurch gekennzeichnet, dass** der erste RNTI einen ersten Definitionsabschnitt und einen zweiten Definitionsabschnitt umfasst und die Basisstation ferner Folgendes umfasst:
ein erstes Maskierungsmodul (134), das konfiguriert ist zum Maskieren eines CRC-Codes durch Verwendung des ersten Definitionsabschnitts, bevor das Sendemodul die Bestätigungsnachricht gemäß dem Ermittlungsergebnis an das Benutzerendgerät sendet; und
ein erstes Ermittlungsmodul (135), das konfiguriert ist zum Ermitteln des zweiten Definitionsabschnitts als die AG-Informationen, bevor das Sendemodul die Bestätigungsnachricht gemäß dem Ermittlungsergebnis an das Benutzerendgerät sendet.

14. Basisstation nach Anspruch 13, wobei die Basisstation, bevor das Sendemodul (133) die Bestätigungsnachricht gemäß dem Ermittlungsergebnis an das Benutzerendgerät sendet, ferner Folgendes umfasst:
ein zweites Maskierungsmodul (136), das konfiguriert ist zum Maskieren einer die AG-Informationen und den CRC-Code umfassenden Folge durch Verwendung des ersten RNTI.

15. Basisstation nach Anspruch 13, wobei die Basisstation, bevor das Sendemodul (133) die Bestätigungsnachricht gemäß dem Ermittlungsergebnis an das Benutzerendgerät sendet, ferner Folgendes umfasst:
ein drittes Maskierungsmodul (137), das konfiguriert ist zum Maskieren des CRC-Codes durch Verwendung des ersten RNTI.

16. Basisstation nach Anspruch 13, wobei die Basisstation, falls die Kollisionserkennungsanfrage einen "Enhanced Radio Network Temporary Identifier", E-RNTI, in einer Zelle, in der sich das Benutzerendgerät befindet, mit Entsprechung zum ersten RNTI führt, bevor das Sendemodul (133) die Bestätigungsnachricht gemäß dem Ermittlungsergebnis an das Benutzerendgerät sendet, ferner ein viertes Maskierungsmodul (138) umfasst, wobei:
das vierte Maskierungsmodul (138) konfiguriert ist zum Maskieren des CRC-Codes durch Verwendung des E-RNTI.

## Revendications

1. Procédé de détection de collision d'équipements d'utilisateur, comprenant les étapes consistant à :
envoyer (101), par un équipement d'utilisateur, une demande de détection de collision sur un canal dédié de liaison montante amélioré commun, E-DCH, à une station de base, la demande de détection de collision contenant un premier identifiant temporaire de réseau radio, RNTI, correspondant à l'équipement d'utilisateur, afin que la station de base détermine si le E-DCH commun est occupé par un équipement d'utilisateur autre que l'équipement d'utilisateur ;
recevoir (102), par l'équipement d'utilisateur, un message d'accusé de réception envoyé par la station de base, le message d'accusé de réception contenant des informations d'octroi absolu, AG, et un code de contrôle de redondance cyclique, CRC ; et
déterminer (103), par l'équipement d'utilisateur, d'après le premier RNTI, les informations AG et le code CRC, si le E-DCH commun est une ressource disponible, **caractérisé en ce que** le premier RNTI contient une première partie de définition et une deuxième partie de définition ; et
le procédé comprenant également les étapes consistant à :
démasquer, par l'équipement d'utilisateur, le code CRC à l'aide de la première partie de définition ; et
si la vérification d'un code CRC a réussi et que la deuxième partie de définition est comprise dans les informations AG, déterminer, par l'équipement d'utilisateur, que le E-DCH commun est une ressource disponible.

2. Procédé selon la revendication 1, le procédé comprenant également les étapes consistant à :
démasquer, par l'équipement d'utilisateur, à l'aide du premier RNTI, une séquence contenant les informations AG et le code CRC ; et
si la vérification d'un code CRC a réussi, déterminer, par l'équipement d'utilisateur, que le E-DCH commun est une ressource disponible.

3. Procédé selon la revendication 1, le procédé comprenant également les étapes consistant à :
déterminer, par l'équipement d'utilisateur, un identifiant temporaire de réseau radio amélioré, E-RNTI, d'une cellule dans laquelle l'équipement d'utilisateur est situé, correspondant au premier RNTI ; et
envoyer, par l'équipement d'utilisateur, à la station de base sur le E-DCH commun, une demande de détection de collision contenant le E-RNTI.

4. Procédé selon l'une quelconque des revendications 1 à 3, dans lequel le premier message de diffusion ou le deuxième message de diffusion contient également un identifiant temporaire de réseau radio amélioré, E-RNTI, correspondant aux informations de ressource du E-DCH commun ; et
après qu'il a été déterminé que le E-DCH commun est une ressource disponible, le procédé comprend également l'étape consistant à :
effectuer, par l'équipement d'utilisateur, une émission de données avec la station de base à l'aide du E-RNTI correspondant au E-DCH commun.

5. Procédé de détection de collision d'équipements d'utilisateur, comprenant les étapes consistant à :
recevoir (501), par une station de base, une demande de détection de collision qui est envoyée sur un canal dédié de liaison montante amélioré commun, E-DCH, par un équipement d'utilisateur, la demande de détection de collision contenant un premier identifiant temporaire de réseau radio, RNTI, correspondant à l'équipement d'utilisateur ;
déterminer (502), par la station de base, si le E-DCH commun est occupé par un équipement d'utilisateur autre que l'équipement d'utilisateur ; et
envoyer (503), par la station de base, un message d'accusé de réception à l'équipement d'utilisateur en fonction d'un résultat de la détermination, le message d'accusé de réception contenant des informations d'octroi absolu, AG, et un code de contrôle de redondance cyclique, CRC,
afin que l'équipement d'utilisateur détermine, d'après le premier RNTI, les informations AG et le code CRC, si le E-DCH commun est une ressource disponible, **caractérisé en ce que** le premier RNTI contient une première partie de définition et une deuxième partie de définition ; et
avant l'envoi, par la station de base, d'un message d'accusé de réception à l'équipement d'utilisateur en fonction du résultat de la détermination, le procédé comprend également les étapes consistant à :
masquer, par la station de base, le code CRC à l'aide de la première partie de définition ; et
déterminer, par la station de base, que la deuxième partie de définition correspond aux informations AG.

6. Procédé selon la revendication 5, comprenant également, avant l'envoi par la station de base d'un message d'accusé de réception à l'équipement d'utilisateur en fonction du résultat de la détermination, l'étape consistant à :
masquer, par la station de base, à l'aide du premier RNTI, une séquence comprenant les informations AG et le code CRC.

7. Procédé selon la revendication 5, comprenant également, avant l'envoi par la station de base d'un message d'accusé de réception à l'équipement d'utilisateur en fonction du résultat de la détermination, l'étape consistant à :
masquer, par la station de base, le code CRC à l'aide du premier RNTI.

8. Procédé selon la revendication 5, le procédé comprenant également, si la demande de détection de collision contient un identifiant temporaire de réseau radio amélioré, E-RNTI, dans une cellule dans laquelle l'équipement d'utilisateur est situé, correspondant au premier RNTI, avant l'envoi par la station de base d'un message d'accusé de réception à l'équipement d'utilisateur en fonction du résultat de la détermination, l'étape consistant à :
masquer, par la station de base, le code CRC à l'aide du E-RNTI.

9. Équipement d'utilisateur, comprenant :
un module d'envoi (81) configuré pour envoyer une demande de détection de collision sur un canal dédié de liaison montante amélioré commun, E-DCH, à une station de base, la demande de détection de collision contenant un premier identifiant temporaire de réseau radio, RNTI, correspondant à l'équipement d'utilisateur, afin que la station de base détermine si le E-DCH commun est occupé par un équipement d'utilisateur autre que l'équipement d'utilisateur ;
un module de réception (82) configuré pour recevoir un message d'accusé de réception envoyé par la station de base, le message d'accusé de réception contenant des informations d'octroi absolu, AG, et un code de contrôle de redondance cyclique, CRC ; et
un module de détermination (83) configuré pour déterminer, d'après le premier RNTI, les informations AG et le code CRC, si le E-DCH commun est une ressource disponible,
**caractérisé en ce que** le premier RNTI contient une première partie de définition et une deuxième partie de définition ; et
l'équipement d'utilisateur comprend également un premier module de démasquage (84) configuré pour démasquer le code CRC à l'aide de la première partie de définition ; et
si la vérification d'un code CRC a réussi et que la deuxième partie de définition est comprise dans les informations AG, le module de détermination (83) est également configuré pour déterminer que le E-DCH commun est une ressource disponible.

10. Équipement d'utilisateur selon la revendication 9, l'équipement d'utilisateur comprenant également un deuxième module de démasquage (85) configuré pour démasquer, à l'aide du premier RNTI, une séquence contenant les informations AG et le code CRC ; et
si la vérification d'un code CRC a réussi, le module de détermination (83) est également configuré pour déterminer que le E-DCH commun est une ressource disponible.

11. Équipement d'utilisateur selon la revendication 9, dans lequel le module de détermination (83) est également configuré pour déterminer un identifiant temporaire de réseau radio amélioré, E-RNTI, dans une cellule dans laquelle l'équipement d'utilisateur est situé, correspondant au premier RNTI ; et
le module d'envoi (81) est également configuré pour envoyer à la station de base, sur le E-DCH commun, une demande de détection de collision contenant le E-RNTI.

12. Équipement d'utilisateur selon l'une quelconque des revendications 9 à 11, dans lequel le premier message de diffusion ou le deuxième message de diffusion peut également contenir un identifiant temporaire de réseau radio amélioré, E-RNTI, correspondant aux informations de ressource du E-DCH commun ; et
après que le module de détermination (83) a déterminé que le E-DCH commun est une ressource disponible, une émission de données avec la station de base est effectuée à l'aide du E-RNTI correspondant au E-DCH commun.

13. Station de base, comprenant :
un module de réception (131) configuré pour recevoir une demande de détection de collision qui est envoyée sur un canal dédié de liaison montante amélioré commun, E-DCH, par un équipement d'utilisateur,
la demande de détection de collision contenant un premier identifiant temporaire de réseau radio, RNTI, correspondant à l'équipement d'utilisateur ;
un module de détermination (132) configuré pour déterminer si le E-DCH commun est occupé par un équipement d'utilisateur autre que l'équipement d'utilisateur ; et
un module d'envoi (133) configuré pour envoyer un message d'accusé de réception à l'équipement d'utilisateur en fonction du résultat de la détermination, le message d'accusé de réception contenant des informations d'octroi absolu (AG) et un code de contrôle de redondance cyclique, CRC, afin que l'équipement d'utilisateur détermine, d'après le premier RNTI, les informations AG et le code CRC, si le E-DCH commun est une ressource disponible,
**caractérisé en ce que** le premier RNTI contient une première partie de définition et une deuxième partie de définition, et la station de base comprend également :
un premier module de masquage (134) configuré pour masquer un code CRC à l'aide de la première partie de définition avant que le module d'envoi n'envoie le message d'accusé de réception à l'équipement d'utilisateur en fonction du résultat de la détermination ; et
un premier module de détermination (135) configuré pour déterminer que la deuxième partie de définition correspond aux informations AG avant que le module d'envoi n'envoie le message d'accusé de réception à l'équipement d'utilisateur en fonction du résultat de la détermination.

14. Station de base selon la revendication 13, la station de base, avant que le module d'envoi (133) n'envoie le message d'accusé de réception à l'équipement d'utilisateur en fonction du résultat de la détermination, comprenant également :
un deuxième module de masquage (136) configuré pour masquer, à l'aide du premier RNTI, une séquence comprenant les informations AG et le code CRC.

15. Station de base selon la revendication 13, la station de base, avant que le module d'envoi (133) n'envoie le message d'accusé de réception à l'équipement d'utilisateur en fonction du résultat de la détermination, comprenant également :
un troisième module de masquage (137) configuré pour masquer le code CRC à l'aide du premier RNTI.

16. Station de base selon la revendication 13, la station de base, si la demande de détection de collision contient un identifiant temporaire de réseau radio amélioré, E-RNTI, dans une cellule dans laquelle l'équipement d'utilisateur est situé, correspondant au premier RNTI, avant que le module d'envoi (133) n'envoie le message d'accusé de réception à l'équipement d'utilisateur en fonction du résultat de la détermination, comprenant également un quatrième module de masquage (138) :
le quatrième module de masquage (138) étant configuré pour masquer le code CRC à l'aide du E-RNTI.
